# EUROPÄISCHE PATENTSCHRIFT

(11) **EP 3 366 501 B1**
(45) Veröffentlichungstag und Bekanntmachung des Hinweises auf die Patenterteilung: **26.08.2020**
(21) Anmeldenummer: 18156977.3
(22) Anmeldetag: 15.02.2018
(51) Int. Cl.: B60G 17/005, B60G 17/019, B60G 21/073

(54) **FAHRWERK FÜR EIN DURCH EINE SELBSTFAHRENDE LANDWIRTSCHAFTLICHE SPRITZVORRICHTUNG GEBILDETES LANDFAHRZEUG UND VERFAHREN ZU DESSEN STEUERUNG.**
SUSPENSION FOR A SELF-PROPELLED AGRICULTURAL SPRAYING VEHICLE AND METHOD FOR ITS CONTROL.
SUSPENSION POUR UN PULVÉRISATEUR AUTOMOTEUR À USAGE AGRICOLE ET SON PROCÉDÉ DE COMMANDE.

(30) Priorität: 22.02.2017 DE 102017103641
(43) Veröffentlichungstag der Anmeldung: 29.08.2018
(73) Patentinhaber: HORSCH LEEB Application Systems GmbH, 94405 Landau an der Isar (DE)
(72) Erfinder: LEEB, Theodor, 94562 Oberpöring (DE); ZINK, Florian, 94562 Oberpöring (DE)
(74) Vertreter: Benninger, Johannes

(56) Entgegenhaltungen:
- EP-A1- 2 772 371
- EP-A1- 2 883 722
- WO-A1-2009/072231
- DE-A1- 1 530 569
- DE-A1- 3 427 508
- DE-A1- 10 347 125
- US-A1- 2013 220 110

## Beschreibung

Die vorliegende Erfindung betrifft ein Fahrwerk eines Landfahrzeuges mit wenigstens einer gegenüber einem Fahrzeugaufbau fluidisch gefederten und/oder gedämpften Achse mit den Merkmalen des unabhängigen Anspruchs 1. Die Erfindung betrifft zudem ein Verfahren zur Federung- und/oder Dämpfungssteuerung wenigstens einer gegenüber einem Fahrzeugaufbau fluidisch gefederten und/oder gedämpften Achse eines Landfahrzeuges mit den Merkmalen des unabhängigen Verfahrensanspruchs 13.

Es ist bekannt, geländegängige Landfahrzeuge, wie sie etwa in der Landwirtschaft eingesetzt werden, mit fluidisch gefederten und/oder gedämpften Radfahrwerken auszustatten. Besonders bei selbstfahrenden Spritzvorrichtungen, die mit Auslegerarmen mit großen Spannweiten ausgestattet sind, ist es sinnvoll, das Fahrwerk des Trägerfahrzeuges mit effektiven Dämpfern und Federn auszustatten, um den Fahrzeugaufbau auf diese Weise möglichst ruhig zu halten, was die Effektivität der in aller Regel aktiv gedämpften Lagerung und Aufhängung des Spritzgestänges erhöht. Da die Auslegerarme des Spritzgestänges möglichst in konstanten Abständen über den landwirtschaftlichen Pflanzenbestand geführt werden sollen, stört jede Aufbaubewegung des Trägerfahrzeuges die Aufhängungsdämpfung, was einen zusätzlichen Regelungsbedarf der Spritzgestängeaufhängung mit sich bringt.

Aus der dem Oberbegriff der unabhängigen Ansprüche entsprechenden DE 196 39 777 A1 ist eine Achsaufhängung eines landwirtschaftlichen Fahrzeuges bekannt, bei dem ein lenkbares Rad mit einer Luftfederung ausgestattet ist. Auf diese Weise ist eine Radaufhängung geschaffen, bei der vertikale Federbewegungen einer Lenkachse über einen Luftfederbalg gefedert und/oder gedämpft sind.

Die US 2013/0220110 A1 offenbart einen hydropneumatischen Federungsmechanismus und eine Einstelleinheit zur Einstellung eines Neigungswinkels eines Fahrzeuges. Das Fahrzeug umfasst jeweils eine gegenüber dem Fahrzeugaufbau fluidisch gefederte und/oder gedämpfte Achse, die zu beiden Seiten des Fahrzeuges mittels jeweils mindestens eines doppeltwirkenden Hydraulikzylinders abgestützt ist. Eine Kammer des Hydraulikzylinders ist mit einem Öltank und über ein erstes Dämpfungsventil und ein elektrisch gesteuertes Schaltventil mit einer Ölquelle für den Nivellierbetrieb des Hydraulikzylinders verbunden, während die andere Kammer des Zylinders über ein elektrisch gesteuertes Schaltventil und ein zweites Dämpfungsventil mit der stablosen Kammer eines Federungsölzylinders verbunden ist.

Die EP 1 911 614 B1 offenbart ein Federungssystem für ein land- oder bauwirtschaftliches Fahrzeug, insbesondere für ein Laderfahrzeug, mit einem ersten und einem zweiten Hydraulikzylinder, die einen Rahmen des Fahrzeugs gegenüber einer Achse des Fahrzeugs abstützen, wobei die Hydraulikzylinder jeweils eine kolbenseitige Kammer und eine stangenseitige Kammer aufweisen und wobei die Hydraulikzylinder in einer Kreuzschaltung über eine erste und eine zweite Verbindungsleitung hydraulisch miteinander verbunden sind, so dass die kolbenseitige Kammer des ersten Hydraulikzylinders mit der stangenseitigen Kammer des zweiten Hydraulikzylinders verbunden ist, und umgekehrt, was einer Wankstabilisierung dienen soll.

Die DE 34 27 508 A1 beschreibt eine Vorrichtung zur Beeinflussung der Federung von geländegängigen Fahrzeugen mit zwei hydraulischen Arbeitszylindern, deren Hydraulikleitungen mit einem zwischen den Arbeitszylindern angeordneten 3/4 Wegeventil in Verbindung stehen. Das 3/4 Wegeventil verfügt über vier Anschlüsse und ist mit einem Schaltorgan in drei verschiedene Schaltstellungen A, B, C verstellbar. Je nach Stellung des 3/4 Wegeventils werden die Arbeitszylinder unterschiedlich angesteuert.

Derartige Kreuzschaltungen weisen zwar zahlreiche Vorteile auf, stoßen jedoch bei manchen Einsatzfällen von landwirtschaftlichen Fahrzeugen an ihre Grenzen, insbesondere bei Fahrten, bei denen das Fahrzeug eine stärkere Seitenneigung aufgrund des vorhandenen Bodenreliefs der zu befahrenden landwirtschaftlichen Nutzfläche erfährt. Da bei vielen landwirtschaftlichen Nutzflächen zur Reduzierung der Erosionsgefahren der Bestand entlang der Höhenlinien angebaut ist, müssen die Flächen auch bei Pflege- und Erntefahrten entlang dieser Höhenlinien befahren werden, was jedoch eine seitliche Fahrzeugneigung mit sich bringt, die je nach Hangneigung ungünstige Ausmaße annehmen kann.

Um dennoch bekannte wankstabilisierte und/oder -stabilisierende Fahrwerke mit fluidisch arbeitenden Kreuzschaltungen einsetzen zu können, kann es als vorrangige Aufgabe der vorliegenden Erfindung angesehen werden, derartige Systeme derart weiterzuentwickeln, dass sie besser für Fahrten entlang von geneigten Bodenoberflächen geeignet sind und dass sie hierbei zu einer insgesamt besseren Stabilisierung des mit dem Fahrwerk ausgestatteten Fahrzeugs beitragen.

Diese Aufgabe wird durch ein Fahrwerk sowie ein Verfahren mit den Merkmalen der jeweiligen unabhängigen Ansprüche 1 bzw. 13 gelöst. Weitere vorteilhafte Ausgestaltungen und Weiterbildungen der Erfindung sind in den jeweiligen abhängigen Ansprüchen beschrieben.

Zur Lösung der genannten Aufgabe schlägt die Erfindung ein Fahrwerk für ein durch eine selbstfahrende landwirtschaftliche Spritzvorrichtung gebildetes Landfahrzeug mit wenigstens einer gegenüber einem Fahrzeugaufbau fluidisch gefederten und/oder gedämpften Achse vor, welche wenigstens eine Achse zu beiden Seiten des Fahrzeuges mittels jeweils mindestens eines doppelt wirkenden Fluidzylinders gegen den Fahrzeugaufbau abgestützt ist.

Das Fahrzeug kann bspw. einen Fahrzeugaufbau mit frontseitigem Antriebsmotor, dahinter angeordneter Fahrerkabine und hinter dieser befindlichem Spritzmitteltank aufweisen. Heckseitig kann das Fahrzeug z.B. mit einem höhenverstellbaren Spritzgestänge ausgestattet sein, das normalerweise über zwei faltbare Auslegerarme mit jeweils einer Mehrzahl von daran befindlichen, regelmäßig voneinander beabstandeten Spritzdüsen verfügt, mit denen das kontinuierlich aus dem Spritzmitteltank entnommene flüssige Spritzmittel während der Fortbewegung des Fahrzeuges bzw. der Spritzvorrichtung in Fahrtrichtung über eine große Arbeitsbreite von bspw. mehr als zwanzig oder dreißig Meter ausgebracht und über den auf dem Acker wachsenden landwirtschaftlichen Nutzpflanzenbestand versprüht werden kann. Der Fahrzeugaufbau kann auf zwei Achsen, insbesondere einer Vorderachse und einer Hinterachse, ruhen. Jeder der gegenüber dem Fahrzeugaufbau gefederten und/oder gedämpften Achsen kann jeweils zu beiden Längsseiten des Fahrzeuges mit gleich groß dimensionierten luftbereiften Fahrzeugrädern ausgestattet sein.

Da bei derartigen selbstfahrenden Spritzvorrichtungen nicht nur die Spritzgestänge mit geeigneten Einrichtungen zur Pendeldämpfung ausgestattet sind und Maßnahmen zur Sicherstellung eines gleichmäßigen Abstandes der Auslegerarme und der daran angeordneten Spritzdüsen zum Boden notwendig sind, sondern auch ein möglichst ruhiger Fahrzeugaufbau bei der Fahrt des Fahrzeuges über Bodenunebenheiten für die exakte Lageregelung des Spritzgestänge von Interesse ist, können wie nachfolgend beschrieben die gefederten und/oder gedämpften Achsen über eine aktive Wankstabilisierung verfügen. Die effektive Wankstabilisierung des Fahrzeuges kann im Wesentlichen durch Kreuzschaltung der doppelt wirkenden Fluidzylinder einer Achse erreicht werden, mit denen der Fahrzeugaufbau auf den Achsen abgestützt ist, und bei der die Kolbenseite des Zylinders einer Seite mit der Ringseite des Zylinders der anderen Seite der jeweiligen Achse fluidisch gekoppelt ist.

Bei dem Fahrwerk ist jede Kolbenseite der mindestens zwei doppelt wirkenden Fluidzylinder der wenigstens einen Achse unter der Gewichtsbelastung des Fahrzeugaufbaus mit Druck beaufschlagt, während eine jeweilige Ringseite der Fluidzylinder entlastet sein kann oder zumindest gegenüber der Druckseite oder Kolbenseite weniger belastet ist, was auch als "relative Entlastung" der Ringseite bezeichnet oder angesehen werden kann. Damit ist gemeint, dass die jeweilige Druckseite oder Kolbenseite der Fluidzylinder aufgrund des darauf wirkenden Fahrzeuggewichts zumindest geringfügig stärker druckbeaufschlagt ist als die jeweilige Ringseite, was u.a. mit den hydraulisch wirksamen Flächen zusammenhängt, die auf der Ringseite geringfügig kleiner sind. Das Fahrwerk kann in einem ersten Betriebsmodus betrieben werden, der im Wesentlichen einer aktiven Wankstabilisierung dient und der deshalb auch als Wankstabilisierungsmodus bezeichnet werden kann. In diesem ersten Betriebsmodus bzw. dem Wankstabilisierungsmodus, der vorrangig für eine Fahrt auf ebenem oder schwach geneigtem Untergrund vorgesehen bzw. dafür geschaltet wird, ist die wenigstens eine Achse unter Einbeziehung der Kolbenseiten und der Ringseiten der Fluidzylinder gefedert und/oder gedämpft, ohne dass es auf die genaue Wirkungsweise der Federung, Dämpfung und/oder fluidische Koppelung der Kolben- und Ringseiten der Fluidzylinder untereinander ankommen soll.

Allerdings sei an dieser Stelle ausdrücklich betont, dass der gewählte Begriff des "ersten Betriebsmodus" keineswegs auf einen bestimmten Untergrund oder eine bestimmte maximal zulässige Hangneigung o.ä. beschränkt ist, sondern in erster Linie auf einen vorgegebenen Programmiermodus des Fahrwerks abzielt. Für welchen tatsächlich befahrenen Untergrund bzw. für welche tatsächlich vorhandenen Bodenverhältnisse das Fahrwerk im ersten Betriebsmodus betrieben wird, soll grundsätzlich durch Programmierung des Systems wählbar, aber nicht durch feste konstruktive Vorgaben vordefiniert sein. Wenn im Zusammenhang der vorliegenden Beschreibung auch meist davon die Rede ist, dass der erste Betriebsmodus für eine Fahrt auf ebenem oder nur schwach geneigtem Gelände vorgesehen ist, so kann der erste Betriebsmodus durchaus auch für Fahrten auf stärker geneigtem Gelände tauglich sein, was insbesondere für Fahrzeuge mit niedrigem Schwerpunkt und/oder für solche mit besonders großer Spurweite der Fall sein kann. Im ersten Betriebsmodus können sich beispielsweise die Räder der Hinterachse auf ebenem, nicht geneigten Boden befinden, wobei bei mittigem Fahrzeugschwerpunkt somit jeweils gleiche Radlasten am linken Hinterrad sowie am rechten Hinterrad übertragen und in den Boden eingeleitet werden.

Wahlweise können die doppelt wirkenden Fluidzylinder in diesem ersten Betriebsmodus bzw. dem Wankstabilisierungsmodus in einer Weise miteinander verschaltet sein, dass zur Ausbildung einer fluidischen Kreuzschaltung eine Kolbenseite des doppelt wirkenden Fluidzylinders an einer ersten Seite der Achse jeweils mit der Ringseite des doppelt wirkenden Fluidzylinders an einer zweiten Seite der Achse fluidisch gekoppelt. Zudem ist in diesem ersten Betriebsmodus auch eine Ringseite des doppelt wirkenden Fluidzylinders an der ersten Seite der Achse jeweils mit der Kolbenseite des doppelt wirkenden Fluidzylinders an der zweiten Seite der Achse fluidisch gekoppelt. Dieser erste Betriebsmodus, bei dem die doppelt wirkenden Fluidzylinder der mindestens einen wankstabilisierten bzw. fluidisch gefederten und/oder gedämpften Achse in Kreuzschaltung miteinander gekoppelt sind, ermöglicht eine effektive Wankabstützung des Landfahrzeuges, die ähnlich wie ein mechanisch arbeitender Stabilisator wirkt. Allerdings sei an dieser Stelle betont, dass der erste Betriebsmodus auch ohne eine solche Kreuzschaltung betreibbar ist, da es in erster Linie auf eine effektive Beruhigung des Fahrwerks bei normaler Feldfahrt ankommen soll.

Konkret kann dies bedeuten, dass im ersten Betriebsmodus, also bei ebenem, nicht geneigtem, ggf. aber vielfältige Unebenheiten aufweisenden Boden, die Hydraulikanordnung zur variabel steuerbaren Wankstabilisierung zumindest der Hinterachse des landwirtschaftlichen Fahrzeuges dienen kann, die zu beiden Seiten mittels jeweils mindestens eines doppelt wirkenden Fluidzylinders bzw. Hydraulikzylinders gegen den Fahrzeugaufbau abgestützt ist. Wahlweise kann eine gleichartige Hydraulikschaltung auch an der Vorderachse des Fahrzeuges vorgesehen sein, wobei jedoch die Hinterachse aufgrund ihrer Nähe zum heckseitig am Fahrzeug angelenkten Spritzgestänge als für die Lageregelung des Spritzgestänges wichtiger anzusehen ist als die Vorderachse, die wahlweise auch ohne eine solche aktive Wankstabilisierung auskommen kann. Vorzugsweise kann auch die Vorderache mit ihren beiden fluidischen Zylindern mit einer solchen aktiven Wankstabilisierung ausgestattet sein.

Jeder der beiden doppelt wirkenden Zylinder der Hinterachse kann eine Kolbenstange aufweisen, die den jeweiligen Zylinder an der Hinterachse abstützt, während der Fahrzeugaufbau über eine der Kolbenstange gegenüberliegenden oberen Stirnseite des jeweiligen Zylinders (Kolbenseite) abgestützt sein kann, so dass jeder der oberen Stirnseite zugewandte Kolbenraum an der Kolbenseite des jeweiligen doppelt wirkenden Fluidzylinders der wenigstens einen Achse unter der Gewichtsbelastung des Fahrzeugaufbaus mit Druck beaufschlagt werden kann, während ein Ringraum an der Kolbenstange zugewandten jeweiligen Ringseite des Fluidzylinders entlastet werden kann und daher mit geringerem Druck beaufschlagt werden kann als die Kolbenseite.

Insbesondere kann die Kolbenseite mit dem Kolbenraum des linken Zylinders über eine erste Druckleitung, in der sich ein erstes schaltbares 2/2-Wege-Ventil zum Absperren dieser Leitung befindet, mit der Ringseite des rechten Zylinders verbunden bzw. fluidisch gekoppelt sein. Außerdem kann die Kolbenseite mit dem Kolbenraum des rechten Zylinders über eine zweite Druckleitung, in der sich ein zweites schaltbares 2/2-WegeVentil zum Absperren dieser Leitung befindet, mit der Ringseite des linkten Zylinders verbunden bzw. fluidisch gekoppelt sein, wodurch bei jeweils geöffneten und damit die Leitungen durchlässig schaltenden Ventilen eine hydraulische Kreuzschaltung zur Realisierung eines Wankstabilisierungsmodus gebildet ist.

Wahlweise können in dem erwähnten ersten Betriebsmodus die beiden Kolbenseiten der mindestens zwei Fluidzylinder über jeweilige Drosselstellen mit ggf. jeweils parallel angeordneten Rückschlagventilen mit separaten Druckspeicher gekoppelt bzw. koppelbar sein, wodurch jeweils ein Volumenausgleich bei Stellbewegungen der Fluidzylinder stattfinden kann. Die Volumina dieser Druckspeicher beeinflussen die Feder- und/oder Dämpfungskennlinien der Fluidzylinder und damit das Federungs- und/oder Dämpfungsverhalten des Fahrwerks dieser Achse. Der beschriebene erste Betriebsmodus eignet sich für eine Feldfahrt in der Ebene oder bei Fahrten auf leicht geneigten Oberflächen.

Dies kann bedeuten, dass zur zusätzlichen Ausbildung einer hydraulischen Federung und/oder Dämpfung die Kolbenseiten der beiden Zylinder jeweils über eine Drossel mit separaten Druckspeichern gekoppelt sind. Jeder der Drosseln kann ein Rückschlagventil parallel geschaltet sein, damit bei einer Entlastung des Druckraumes der Kolbenseiten der in den Druckspeichern aufgebaute Druck schnell und ungehindert abgebaut werden kann, wodurch die Achse an diesen Stellen jeweils schnell ausfedern kann, während aufgrund der Drosseln der Druckaufbau in den Druckspeichern langsamer vonstattengeht, wodurch eine höhere Druckdämpfung mit einer geringeren Zugdämpfung der Zylinder realisiert werden kann. Die Durchlässigkeit der Drosseln und die Fassungsvolumina der Druckspeicher können hierbei die Federungs- und Dämpfungscharakteristika der Fahrzeugfederung sowie der Dämpfung der Aufbaubewegungen beeinflussen.

Zusätzlich kann jede Kolbenseite des linken sowie des rechten Zylinders mit einem Druckanschluss für eine Niveauregelung an der rechten Seite wie auch an der linken Seite ausgestattet sein. Mit diesen Druckanschlüssen kann die Aufbauhöhe in Abhängigkeit vom jeweiligen Fahrzeuggewicht, bspw. durch sich leerenden Spritzmitteltank angepasst werden, indem die Druckniveaus der gesamten Hydrauliksysteme für die linke und die rechte Seite variiert und an verschiedene Belastungsfälle und/oder Fahrzeuggewichte bzw. Bodenverhältnisse angepasst werden können.

Die solcherart mittels der beschriebenen Kreuzschaltung realisierte Wankstabilisierung für das Fahrzeug kann auf dem Prinzip der Druckübertragung von der linken auf die rechte Seite, wenn der linke Zylinder bspw. durch eine Erhebung im Boden plötzlich mit Druck beaufschlagt wird, basieren und umgekehrt. In diesem Fall kann gleichzeitig die rechte Seite mit dem rechten Zylinder entlastet werden, was durch eine Druckübertragung auf die Ringseite der rechten Seite (rechter Zylinder) erfolgen kann. Auf diese Weise kann das Fahrzeug weniger ausgeprägt wanken, wenn nur eine Seite ein- oder ausgelenkt wird, was mit der Wirkungsweise eines mechanischen Stabilisators vergleichbar ist. Es kann bzw. können also ein Volumen- und/oder ein Druckausgleich bei Bewegung der Federungszylinder stattfinden.

Durch Verwendung nur jeweils eines Druckspeichers kann sich eine relativ harte Federungscharakteristik (geringe Federwege, steile und progressive Federkennlinien) ergeben; ebenso denkbar wäre es, eine solche Kreuzschaltung mit mehreren Hydrospeichern je Seite auszustatten, die ggf. über weitere, hier nicht dargestellte Ventile hinzu- oder bedarfsweise weggeschaltet werden könnten.

Dagegen kann die zuvor erläuterte Kreuzschaltung oder auch eine andere Verschaltung der Fluidzylinder zur Aufrechterhaltung einer regulären fluidischen Federung und/oder Dämpfung des Fahrwerks des Fahrzeugs bei Fahrten entlang eines stärker geneigten Landschaftsreliefs ungünstig sein, weshalb das Fahrwerk neben dem ersten Betriebsmodus einen zweiten Betriebsmodus vorsieht, der auch als Stabilisierungsmodus zur Reduzierung und/oder Kompensierung eines am Schräghang stark seitlich geneigten Fahrzeugaufbaus bezeichnet wird. Bei diesem zweiten Betriebsmodus ist/sind, ggf. unter Aufhebung der fluidischen Kreuzschaltung, sofern diese im ersten Betriebsmodus genutzt wird, jede der beiden Kolbenseiten der doppelt wirkenden Fluidzylinder unter Absperrung weiterer fluidischer bzw. aller übrigen fluidischen Verbindungen ggf. nur noch über die Drosselstellen mit den jeweiligen Druckspeichern gekoppelt oder wahlweise auch von diesen getrennt ist, während zumindest die Ringseite des hangabwärts des Schräghangs liegenden doppelt wirkenden Fluidzylinders in geeigneter Weise mittels Freigabe oder Aktivierung einer schaltbaren fluidischen Verbindung oder Leitung druckentlastet ist.

Konkret kann dies bedeuten, dass bei einem stark geneigten Boden und damit bei außermittigen Fahrzeugschwerpunkt jeweils unterschiedliche Radlasten am linken Hinterrad sowie am rechten Hinterrad übertragen und in den Boden eingeleitet werden. So kann das Fahrzeug beispielsweise stark nach links geneigt sein, so dass das linke Hinterrad hangabwärts und das rechte Rad hangaufwärts angeordnet ist. Somit kann auf das linke Rad eine deutlich höhere Radlast als auf das rechte Rad wirken, das mit deutlich geringerer Radlast beaufschlagt wird. Je nach Bodenneigung kann das Fahrzeug wahlweise auch stark nach rechts geneigt sein, so dass das rechte Hinterrad hangabwärts und das linke Rad hangaufwärts angeordnet ist. Somit kann auf das rechte Rad eine deutlich höhere Radlast als auf das linke Rad wirken, das mit deutlich geringerer Radlast beaufschlagt wird.

In einer sinnvollen Ausführungsvariante kann bspw. vorgesehen sein, dass im zweiten Betriebsmodus zumindest die Ringseite des hangabwärts des Schräghangs liegenden doppelt wirkenden Fluidzylinders über eine schaltbare fluidische Tankverbindung zu einem zentralen Fluidtank druckentlastet ist. Bei dem Fahrwerk kann optional und zur Aufrechterhaltung einer gewissen Federwirkung auch im zweiten Betriebsmodus vorgesehen sein, dass jede der beiden Kolbenseiten über jeweils eine Drosselstelle mit parallel angeordnetem Rückschlagventil mit einem separaten Druckspeicher gekoppelt bzw. koppelbar ist. Im zweiten Betriebsmodus kann das Druckfluid somit allenfalls noch in den Druckspeicher fließen, was eine deutliche Verhärtung der Federung der am hangabwärts gerichteten Rad befindlichen Fluidzylinders der jeweiligen Achse bewirkt und für die Reduzierung der ansonsten auftretenden Seitenneigung des Fahrzeuges aufgrund der Schwerpunktsverlagerung in Richtung hangabwärts sorgen kann. Durch das im zweiten Betriebsmodus vorgesehene Öffnen eines zusätzlichen Ventils kann die Ringseite des hangabwärts des Schräghangs liegenden doppelt wirkenden Fluidzylinders insbesondere zum Tank hin oder auf andere geeignete Weise entlastet werden. Auf diese Weise wird dieser zuvor als doppelt wirkender Fluidzylinder fungierende Zylinder von einem Differentialzylinder auf einen einfachwirkenden Zylinder umgeschaltet. D.h. in diesem hangabwärts gerichteten Zylinder befindet sich in der Kolbenseite ein sehr hohes Druckniveau, während auf der Ringseite ein sehr stark reduziertes Druckniveau von bspw. weniger als fünf bar herrscht. Auf diese Weise kann eine sehr ausgeprägte Wankabstützung bei starkem Seitenhang erreicht werden.

Die Erfindung gemäß den Ansprüchen sieht vor, dass im ersten Betriebsmodus im hangabwärts des Schräghangs liegenden doppelt wirkenden Fluidzylinder die für die Druckverhältnisse wirksame Fläche im Wesentlichen eine von der Kolbenstange beanspruchte Fläche ist und/oder durch eine Differenz aus einer Fläche des Kolbens an der Kolbenseite und einer wirksamen Fläche des Kolbens an der Ringseite gebildet ist, wogegen die wirksame Fläche im zweiten Betriebsmodus im Wesentlichen durch die Fläche des Kolbens gebildet ist, insbesondere die zur Kolbenseite hin weisende Fläche des Kolbens, da die Ringseite weitgehend druckentlastet ist.

Bei einer Variante des erfindungsgemäßen Fahrwerks kann die Ringseite des hangaufwärts des Schräghangs liegenden doppelt wirkenden Fluidzylinders wahlweise über eine schaltbare Verbindung zu einem weiteren Druckspeicher gekoppelt werden, wodurch eine weichere Federkennlinie einstellbar ist, was wiederum der besseren Wankabstützung bei einem starken Seitenhang in Richtung hangaufwärts dienen kann.

Bei dem erfindungsgemäßen Fahrwerk kann/können bspw. eine Neigung des Fahrzeugaufbaus um eine Fahrzeuglängsachse und damit ein Fahrzustand mit Hangschräglauf mittels wenigstens eines mit dem Fahrzeugaufbau gekoppelten Neigungssensors erfassbar sein. Als Grenzneigung, bei der zwischen dem ersten Betriebszustand (Kreuzschaltung aktiv) und dem zweiten Betriebszustand (Kreuzschaltung blockiert und Ringseite zum Tank druckentlastet) umgeschaltet wird, kann insbesondere eine Seitenneigung des Fahrzeuges definiert sein, die noch ausreichend von dessen Kippgrenze entfernt ist, was bspw. bei einer Seitenneigung von ca. 30 Grad der Fall sein kann. Wahlweise oder zusätzlich kann/können eine Neigung des Fahrzeugaufbaus um eine Fahrzeuglängsachse und damit ein Fahrzustand mit Hangschräglauf mittels wenigstens eines mit dem Fluidkreislauf der fluidisch gefederten und/oder gedämpften Achse des Landfahrzeuges gekoppelten Drucksensors erfassbar sein. Diese Neigungserfassung auf Basis von Drucksensoren kann aus Sicherheitsgründen auch mit einer Neigungserfassung auf Grundlage von Neigungssensoren kombiniert sein. Bei der Variante mit Drucksensoren zur Neigungserfassung kann bspw. vorgesehen sein, dass jeweils mindestens ein Drucksensor in einer Druckleitung der jeweiligen Kolbenseite der beiden doppelt wirkenden Fluidzylinder der mindestens einen Achse des Landfahrzeuges vorgesehen bzw. angeordnet ist.

Sobald ein Fahrzeug in einem Seitenhang mit kritischer Seitenneigung kommt, bei der das Fahrzeug knapp an eine Kippgrenze gerät, kann die Schaltungskonfiguration gemäß zweiten Betriebsmodus zum Tragen kommen. Durch Schließen sowohl des ersten schaltbaren 2/2-Wege-Ventils in der ersten Druckleitung als auch des zweiten schaltbaren 2/2-Wege-Ventils in der zweiten Druckleitung kann die zuvor bestehende Kreuzschaltung aufgehoben und unterbrochen werden. Das Hydraulikfluid im linken Hydraulikzylinder kann aus dem Kolbenraum an der Kolbenseite nur noch in den zugeordneten Druckspeicher fließen, wobei die Verbindung zum linken Druckanschluss für die Niveauregelung der linken Seite unverändert offen bleibt. Gleiches gilt analog für die rechte Seite, bei der das Hydraulikfluid im rechten Hydraulikzylinder aus dem Kolbenraum an der Kolbenseite ebenfalls nur noch in den zugeordneten Druckspeicher fließen kann, wobei wiederum die Verbindung zum rechten Druckanschluss für die Niveauregelung der rechten Seite unverändert offen bleibt.

Die starke Hangneigung (Neigung des Fahrzeuges nach links) kann eine deutlich höhere Radlast auf der linken Seite im linken Hydraulikkreis an der Kolbenseite des linken Zylinders und im linken Druckspeicher ein deutlich höheres Druckniveau verursachen als dies aufgrund der geringeren Radlast auf der rechten Seite des Hydraulikkreises der Fall ist. Da aber in diesem Betriebszustand eine ausgeprägte Wandabstützung wünschenswert ist, jedoch die linke Ringseite aufgrund des nunmehr geschlossenen zweiten Ventils nicht mehr über den rechten Kolbenraum entlastet werden kann, sieht der Stabilisierungsmodus nicht nur die Aufhebung der fluidischen Kreuzschaltung mit geschlossenen Ventilen vor, wobei jede der beiden Kolbenseiten der doppelt wirkenden Fluidzylinder unter Absperrung der hydraulischen Verbindungen im Wesentlichen nur noch über die Drosselstellen mit den jeweiligen Druckspeichern gekoppelt sind. Der Stabilisierungsmodus, der im Wesentlichen zur Reduzierung und/oder Kompensierung eines am Schräghang stark seitlich geneigten Fahrzeugaufbaus beitragen soll, kann zudem eine Druckentlastung der Ringseite des hangabwärts des Schräghangs liegenden doppelt wirkenden linken Fluidzylinders über eine schaltbare fluidische Tankverbindung bzw. eine hydraulische Tankleitung zu einem zentralen Fluidtank oder zentralen Hydrauliktank vorsehen. Um diese Druckentlastung der linken Ringseite mit dem linken Ringraum zu ermöglichen, kann in der zweiten Druckleitung eine Verzweigungsstelle angeordnet sein, die über die hydraulische Tankleitung zum zentralen Hydrauliktank führt. Um diese hydraulische Tankleitung im Stabilisierungsmodus schaltbar zu machen, kann in dieser Leitung hinter der Verzweigungsstelle ein drittes schaltbares 2/2-Wege-Ventil angeordnet sein, das die Tankleitung bei Bedarf und bei gleichzeitig versperrten ersten und zweiten Ventilen öffnen kann. Bei geöffnetem dritten Ventil kann der linke Zylinder von einem Differentialzylinder zu einem einfachwirkenden Zylinder umgeschaltet werden, da bei hohem Druckniveau auf der Kolbenseite ein vergleichsweise niedriges Druckniveau (z.B. weniger als fünf bar) auf der Ringseite herrschen. Das Ergebnis dieser Schaltstellungen der Ventile ist eine sehr effektive Wankabstützung bei starken Seitenhang.

Es sei an dieser Stelle darauf hingewiesen, dass die beschriebene Druckentlastung nicht zwingend über den Hydrauliktank erfolgen muss, sondern auch über andere Druckfluidreservoirs erfolgen kann, ggf. unterstützt durch ein zur Ringseite öffnendes Rückschlagventil, das in diesem Fall auch als Nachsaugventil angesehen bzw. bezeichnet werden kann, da es ein Rückströmen des Druckfluids vom jeweils druckentlasteten Ringraum (in diesem Fall dem linken Ringraum) verhindert, wogegen es ein Nachsaugen zum Ringraum hin erlaubt.

Für einen Druckausgleich auf der Ringseite des in dieser Fahrsituation am Seitenhang deutlich entlasteten rechten Zylinders kann ein weiterer Druckspeicher sorgen, der über ein viertes schaltbares 2/2-Wege-Ventil direkt mit dem rechten Ringraum am rechten Zylinder verbunden sein und dort für eine weichere Federkennlinie sorgen kann.

Gleichermaßen sei darauf hingewiesen, dass eine entsprechende Verschaltung auch der doppelt wirkenden Hydraulikzylinder der Vorderachse möglich ist und sinnvoll sein kann, um eine noch effektivere Wankstabilisierung und Neigungsstabilisierung des Fahrzeuges zu ermöglichen.

Der erste und zweite Betriebsmodus kann im Detail wie folgt beschrieben werden: Gemäß erstem Betriebsmodus kann bei geöffnetem ersten 2/2-Wege-Ventil die erste Druckleitung freigeschaltet werden, wodurch der linke Kolbenraum des linken Zylinders mit dem rechten Ringraum des rechten Zylinders fluidisch gekoppelt ist. Zudem kann bei geöffnetem zweiten 2/2-Wege-Ventil die zweite Druckleitung freigeschaltet werden, wodurch der rechte Kolbenraum des rechten Zylinders mit dem linken Ringraum des linken Zylinders fluidisch gekoppelt ist, was der Kreuzschaltung entsprechend kann.

Die für die Druckverhältnisse beim Heben und Senken des Kolbens wirksamen Flächen am linken Kolben können sich daher im ersten Betriebsmodus aufgrund der im System herrschenden Drücke im Wesentlichen durch die von der Kolbenstange beanspruchten Fläche ergeben. Gleichermaßen können die auf den linken Kolben insgesamt wirkenden Drücke als proportional zu einer Differenz aus der Fläche des Kolbens an der Kolbenseite und einer effektiv wirksamen Fläche des Kolbens an der Ringseite errechnen werden. Diese an der Ringseite befindliche effektive Fläche kann sich aus der Differenz der Gesamtfläche des Kolbens und der an der Ringseitenfläche fehlenden Fläche, die durch die Kolbenstange beansprucht wird, ergeben. Dagegen kann die wirksame Fläche im zweiten Betriebsmodus im Wesentlichen durch die Fläche des Kolbens gebildet werden.

Der Zusammenhang der von beiden Seiten auf den Kolben wirkenden Druckkräfte, die von den wirksamen Flächen abhängigen bzw. zu diesen proportional sind, kann folgendermaßen dargestellt werden: eine Fläche A₁ kann die zum Kolbenraum weisende Gesamtfläche des Kolbens sein, während eine Fläche A₃ die Fläche der zum Ringraum weisenden Unterseite des Kolbens sein kann, die jedoch um eine Fläche A₂, nämlich die mittig von der Kolbenstange beanspruchte Fläche, reduziert ist. Die von der Kolbenstange beanspruchte Fläche A₂ kann sich errechnen aus: A₃ = A₁ - A₂ bzw. umgestellt errechnen aus: A₂ = A₁ - A₃.

Da die wirksame Kraft bei einem doppeltwirkenden Zylinder das Produkt aus der Fläche, auf welche die Kraft einwirkt, und dem an der Fläche anliegenden Druck sein kann, kann die für die Druckverhältnisse wirksame Fläche A₂ auch die für am Zylinder bzw. an dessen Kolben im ersten Betriebsmodus anliegenden Kräfte relevante Fläche darstellen, insbesondere bei vergleichbaren Druckverhältnissen im Kolbenraum und im Ringraum.

Gemäß zweitem Betriebsmodus kann bei versperrtem ersten 2/2-Wege-Ventil die erste Druckleitung versperrt sein, wodurch der linke Kolbenraum des linken Zylinders allenfalls noch über die Drossel mit dem linken Druckspeicher verbunden und ansonsten gegenüber weiteren Komponenten fluidisch abgeschlossen sein kann. Zudem kann auch bei versperrtem zweiten 2/2-Wege-Ventil die zweite Druckleitung versperrt sein, wodurch der rechte Kolbenraum des rechten Zylinders nicht mehr mit dem linken Ringraum des linken Zylinders fluidisch gekoppelt ist, was insgesamt dem zweiten Betriebsmodus mit der aufgehobenen Kreuzschaltung entspricht.

Außerdem kann in diesem zweiten Betriebsmodus die linke Ringseite mit dem linken Ringraum über das geöffnete dritte 2/2-Wege-Ventil und über die druckentlastende hydraulische Tankleitung mit dem zentralen Hydrauliktank verbunden und dadurch weitgehend druckentlastet sein. Bei druckentlasteter Ringseite kann daher nur noch die Kolbenseite für die Abstützung des Fahrzeuges gegen die hangabwärts gerichtete Seite wirksam sein, während die druckentlastete Ringseite keinen Gegendruck gegen die verstärkte Abstützung auf der Kolbenseite ausübt.

Als für die Druckverhältnisse wirksame Fläche am linken Kolben kann daher im zweiten Betriebsmodus aufgrund der im System herrschenden Drücke nur noch die zum Kolbenraum weisende Gesamtfläche A₁ des Kolbens verbleiben, die in diesem Fall auch die für die Druckverhältnisse alleine wirksame Fläche A₁ bildet.

Eine weitere Variante des erfindungsgemäßen Fahrwerks kann vorsehen, dass dieses Fahrwerk zwei unabhängig voneinander fluidisch gefederte und/oder gedämpfte Achsen mit jeweils mindestens zwei an den Längsseiten des Fahrzeuges angeordneten Rädern umfasst, wobei die beiden doppelt wirkenden Fluidzylinder mindestens einer der wenigstens zwei Achsen im ersten und/oder zweiten Betriebsmodus betreibbar sind.

Wenn im Zusammenhang der vorliegenden Beschreibung von fluidischem Druck oder von fluidisch arbeitenden Zylindern oder Komponenten die Rede ist, so können damit in der Regel hydraulische Komponenten und eine hydraulische Druckübertragung gemeint sein, was jedoch nicht einschränkend zu verstehen ist.

Wenn daher im Zusammenhang mit der vorliegenden Beschreibung teilweise von hydraulischer Druckübertragung die Rede ist, so kann dies eine fluidische Druckübertragung oder eine pneumatische Druckübertragung meinen, ohne dass gesondert darauf hingewiesen werden muss, was jedoch - insbesondere bei der Verwendung einer pneumatischen Druckübertragung - bei der Auswahl und/oder der Dimensionierung einiger der eingesetzten Komponenten zu berücksichtigen sein wird.

Weiterhin sei an dieser Stelle betont, dass die mindestens zwei Achsen des Fahrzeuges wahlweise unabhängig voneinander oder auch gemeinsam in der beschriebenen Art und Weise in den zwei unterschiedlichen Betriebsmodi betrieben werden können. Es kann auch genügen, ggf. nur eine von zwei oder mehr Achsen des Fahrzeuges in der beschriebenen Art und Weise in den zwei unterschiedlichen Betriebsmodi zu betreiben. Außerdem sei an dieser Stelle darauf hingewiesen, dass nicht beide Seiten des Fahrzeuges in absolut symmetrischer Anordnung verschaltet sein müssen. So kann es für spezielle Anwendungsfälle unter Umständen auch sinnvoll sein, nur die linke Seite oder nur die rechte Seite einer Achse oder von zwei Achsen mit einer ausgeprägten fluidischen Stabilisierung bzw. Hangabstützung auszustatten, wie sie oben beschrieben wurde. Auch eine solche unsymmetrische Ausgestaltung des beschriebenen Fahrwerks soll von der vorliegenden Erfindung mit umfasst sein. Gleiches gilt für das nachfolgend beschriebene Verfahren in all seinen Ausführungsvarianten.

Zur Lösung der oben genannten Aufgabe schlägt die Erfindung weiterhin ein Verfahren zur Federung- und/oder Dämpfungssteuerung wenigstens einer gegenüber einem Fahrzeugaufbau fluidisch gefederten und/oder gedämpften Achse eines
durch eine selbstfahrende landwirtschaftlichen Spritzvorrichtung gebildeten Landfahrzeuges vor, die zu beiden Seiten mittels jeweils mindestens eines doppelt wirkenden Fluidzylinders gegen den Fahrzeugaufbau abgestützt ist. Jede Kolbenseite der mindestens zwei doppelt wirkenden Fluidzylinder der wenigstens einen Achse wird unter der Gewichtsbelastung des Fahrzeugaufbaus mit Druck beaufschlagt, während eine jeweilige Ringseite der Fluidzylinder entlastet oder zumindest teilweise entlastet oder auch etwas geringer belastet sein kann als die jeweilige Kolbenseite. Außerdem sieht das Verfahren vor, dass die wenigstens eine Achse in einem ersten Betriebsmodus, der auch als Wankstabilisierungsmodus bezeichnet werden kann, für eine Fahrt auf ebenem oder schwach geneigtem Untergrund unter Einbeziehung der Kolbenseiten und der Ringseiten der Fluidzylinder gefedert und/oder gedämpft wird.

Hierbei kann das Verfahren bspw. vorsehen, dass in einem ersten Betriebsmodus, der auch als Wankstabilisierungsmodus bezeichnet werden kann, zur Ausbildung einer fluidischen Kreuzschaltung eine Kolbenseite des doppelt wirkenden Fluidzylinders an einer ersten Seite der Achse jeweils mit der Ringseite des doppelt wirkenden Fluidzylinders an einer zweiten Seite der Achse fluidisch gekoppelt ist, wobei gleichzeitig eine Ringseite des doppelt wirkenden Fluidzylinders an der ersten Seite der Achse jeweils mit der Kolbenseite des doppelt wirkenden Fluidzylinders an der zweiten Seite der Achse fluidisch gekoppelt ist. Dieser erste Betriebsmodus kann insbesondere für eine Feldfahrt in der Ebene oder bei leichtem Seitenhang geschaltet sein.

Allerdings sei an dieser Stelle nochmals darauf hingewiesen, dass der gewählte Begriff des "ersten Betriebsmodus" nicht auf einen bestimmten Untergrund oder eine bestimmte maximal zulässige Hangneigung o.ä. beschränkt sein soll, sondern in erster Linie auf einen vorgegebenen Programmiermodus für die Wankstabilisierung und/oder Abstützung des Fahrzeuges abheben will. Für welchen tatsächlich befahrenen Untergrund bzw. für welche tatsächlich vorhandenen Bodenverhältnisse das Fahrwerk im ersten Betriebsmodus betrieben wird, soll grundsätzlich durch Programmierung des Systems wählbar, aber nicht durch feste konstruktive Vorgaben vordefiniert sein. Wenn im Zusammenhang der vorliegenden Beschreibung auch meist davon die Rede ist, dass der erste Betriebsmodus für eine Fahrt auf ebenem oder nur schwach geneigtem Gelände vorgesehen ist, so kann der erste Betriebsmodus durchaus auch für Fahrten auf stärker geneigtem Gelände tauglich sein, was insbesondere für Fahrzeuge mit niedrigem Schwerpunkt und/oder für solche mit besonders großer Spurweite der Fall sein kann.

Neben dem ersten Betriebsmodus mit optional aktivierter Kreuzschaltung sieht das Verfahren auch einen zweiten Betriebsmodus bzw. einen Stabilisierungsmodus zur Reduzierung und/oder Kompensierung eines am Schräghang stark seitlich geneigten Fahrzeugaufbaus vor, bei dem unter Aufhebung der fluidischen Kreuzschaltung, sofern diese im ersten Betriebsmodus vorgesehen ist, jede der beiden Kolbenseiten der doppelt wirkenden Fluidzylinder unter Absperrung aller übrigen fluidischen Verbindungen nur noch über die Drosselstellen mit den jeweiligen Druckspeichern gekoppelt ist, während zumindest die Ringseite des hangabwärts des Schräghangs liegenden doppelt wirkenden Fluidzylinders über eine schaltbare fluidische Verbindung druckentlastet wird. Das Verfahren kann für den zweiten Betriebsmodus bspw. vorsehen, dass die Ringseite des hangabwärts des Schräghangs liegenden doppelt wirkenden Fluidzylinders über eine schaltbare fluidische Tankverbindung zu einem zentralen Fluidtank druckentlastet wird. Durch das Öffnen eines zusätzlichen Ventils kann im zweiten Betriebsmodus die Ringseite des hangabwärts befindlichen Fluidzylinders zum Tank hin oder auf andere Weise druckentlastet werden, wodurch der Zylinder nur noch als einfachwirkender Zylinder arbeitet, bei dem die Ringseite mit geringem Druck beaufschlagt ist, während an der Kolbenseite ein hohes Druckniveau herrscht, welches das Fahrzeug effektiv gegen die Hangneigung abstützen kann.

Die Erfindung gemäß den Ansprüchen sieht vor, dass im ersten Betriebsmodus im hangabwärts des Schräghangs liegenden doppelt wirkenden Fluidzylinder die für die Druckverhältnisse wirksame Fläche im Wesentlichen eine von der Kolbenstange beanspruchte Fläche ist und/oder durch eine Differenz aus einer Fläche des Kolbens an der Kolbenseite und einer wirksamen Fläche des Kolbens an der Ringseite gebildet ist, während die wirksame Fläche im zweiten Betriebsmodus im Wesentlichen durch die Fläche des Kolbens gebildet wird. Das erfindungsgemäße Verfahren sieht hierbei somit eine Umschaltung der wirksamen Flächen im Dämpfungszylinder vor.

Bei dem Verfahren kann wahlweise vorgesehen sein, dass jede der beiden Kolbenseiten über jeweils eine Drosselstelle mit parallel angeordnetem Rückschlagventil mit einem separaten Druckspeicher gekoppelt ist. Außerdem kann die Ringseite des hangaufwärts des Schräghangs liegenden doppelt wirkenden Fluidzylinders über eine schaltbare Verbindung zu einem weiteren Druckspeicher gekoppelt werden, was die hangaufwärts gerichtete Seite weicher federn lässt, was wiederum der zu starken Hangneigung des Fahrzeuges entgegenwirken kann.

Das Verfahren kann vorsehen, dass eine Neigung des Fahrzeugaufbaus um eine Fahrzeuglängsachse und damit ein Fahrzustand mit Hangschräglauf mittels wenigstens eines mit dem Fahrzeugaufbau gekoppelten Neigungssensors erfasst werden. Außerdem kann das Verfahren vorsehen, dass eine Neigung des Fahrzeugaufbaus um eine Fahrzeuglängsachse und damit ein Fahrzustand mit Hangschräglauf mittels wenigstens eines mit dem Fluidkreislauf der fluidisch gefederten und/oder gedämpften Achse des Landfahrzeuges gekoppelten Drucksensors erfasst werden. Jeweils mindestens ein Drucksensor kann in einer Druckleitung der jeweiligen Kolbenseite der beiden doppelt wirkenden Fluidzylinder der mindestens einen Achse des Landfahrzeuges vorgesehen sein.

Es sei auf dieser Stelle darauf hingewiesen, dass das Fahrwerk wahlweise über eine Einzelradaufhängung oder über eine Pendelachsaufhängung o. dgl. Aufhängung verfügen kann. Die Erfindung funktioniert bei den verschiedensten Achskonstruktionen gleichermaßen gut. Häufig sind solche landwirtschaftliche Fahrzeuge mit einfachen und robusten Starrachsen ausgestattet, wobei die Vorderachsen zur Verbesserung der Geländegängigkeit meist über ein Pendelgelenk verfügen. Bei der Erfindung kann wahlweise eine Einzelradaufhängung vorgesehen sein, die gegenüber Starrachsen den Vorteil bieten kann, dass keine oder nur eine geringfügige gegenseitige Beeinflussung der Federung auf beiden Seiten des Fahrzeugs erfolgt. So kann eine Einzelradaufhängung bei dem erfindungsgemäßen Fahrwerk bspw. als McPherson-Federbein, als Schwinge oder als Raumlenkerachsen ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht eines landwirtschaftlichen Fahrzeuges, bei dem die Erfindung vorteilhaft zur Anwendung kommen kann.
Fig. 2A zeigt eine schematische Draufsicht auf ein zweiachsiges Fahrzeug mit fluidisch gefederten und/oder gedämpften Achsen.
Fig. 2B zeigt eine Heckansicht des Fahrzeuges gemäß Fig. 2A, das sich auf ebenem Boden befindet.
Fig. 3 zeigt ein schematisches Blockschaltbild des fluidisch arbeitenden Federungs- und/oder Dämpfungssystems einer Achse des Fahrzeuges, das in einem ersten Betriebsmodus arbeitet.
Fig. 4A zeigt eine schematische Draufsicht auf das zweiachsige Fahrzeug mit fluidisch gefederten und/oder gedämpften Achsen.
Fig. 4B zeigt eine Heckansicht des Fahrzeuges gemäß Fig. 2A, das sich auf stark seitlich geneigtem Boden befindet.
Fig. 5 zeigt ein schematisches Blockschaltbild des fluidisch arbeitenden Federungs- und/oder Dämpfungssystems einer Achse des Fahrzeuges, das in einem zweiten Betriebsmodus arbeitet.
Fig. 6 zeigt in insgesamt vier Detailausschnitten aus dem schematischen Blockschaltbild der Fig. 3 (Fig. 6A) sowie aus dem schematischen Blockschaltbild der Fig. 5 (Fig. 6B) die Vorgänge beim Wechseln vom ersten Betriebsmodus in den zweiten Betriebsmodus und die wirksamen Flächenverhältnisse im doppelt wirkenden Zylinder (Fig. 6C, Fig. 6D).

Es sei darauf hingewiesen, dass die dargestellten Ausführungsformen lediglich Beispiele darstellen sollen, wie das erfindungsgemäße Steuerungssystem oder das erfindungsgemäße Verfahren ausgestaltet sein können und stellen keine abschließende Begrenzung dar.

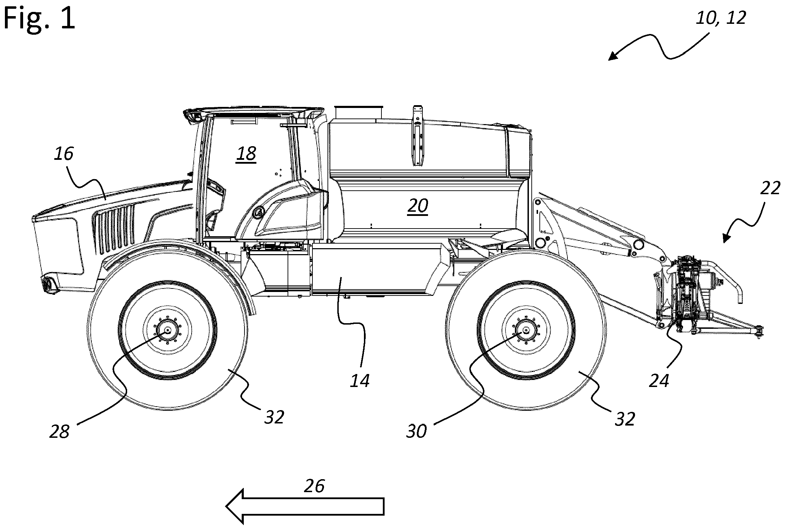

Die schematische Seitenansicht der Fig. 1 zeigt eine Ausführungsvariante eines Landfahrzeuges 10 im Sinne der vorliegenden Erfindung, das durch eine selbstfahrende Spritzvorrichtung 12 zur Ausbringung von flüssigem Spritzmittel auf landwirtschaftliche Nutzflächen vorgesehen und ausgebildet ist. Das Fahrzeug 10 weist einen Fahrzeugaufbau 14 mit frontseitigem Antriebsmotor 16, dahinter angeordneter Fahrerkabine 18 und hinter dieser befindlichem Spritzmitteltank 20 auf. Heckseitig ist das Fahrzeug 10 mit einem höhenverstellbaren Spritzgestänge 22 ausgestattet, das normalerweise über zwei faltbare Auslegerarme 24 mit jeweils einer Mehrzahl von daran befindlichen, regelmäßig voneinander beabstandeten Spritzdüsen verfügt, mit denen das kontinuierlich aus dem Spritzmitteltank 20 entnommene flüssige Spritzmittel während der Fortbewegung des Fahrzeuges 10 bzw. der Spritzvorrichtung 12 in Fahrtrichtung 26 über eine große Arbeitsbreite von bspw. mehr als zwanzig oder dreißig Meter ausgebracht und über den auf dem Acker wachsenden landwirtschaftlichen Nutzpflanzenbestand versprüht werden kann. Der Fahrzeugaufbau 14 ruht auf zwei Achsen 28 und 30, nämlich einer Vorderachse 28 und einer Hinterachse 30. Jede der gegenüber dem Fahrzeugaufbau 14 gefederten und/oder gedämpften Achsen 28 und 30 ist jeweils zu beiden Längsseiten des Fahrzeuges 10 mit gleich groß dimensionierten luftbereiften Fahrzeugrädern 32 ausgestattet.

Da bei derartigen selbstfahrenden Spritzvorrichtungen 12 nicht nur die Spritzgestänge 22 mit geeigneten Einrichtungen zur Pendeldämpfung ausgestattet und Maßnahmen zur Sicherstellung eines gleichmäßigen Abstandes der Auslegerarme 24 und der daran angeordneten Spritzdüsen zum Boden notwendig sind, sondern auch ein möglichst ruhiger Fahrzeugaufbau 14 bei der Fahrt des Fahrzeuges 10 über Bodenunebenheiten für die exakte Lageregelung des Spritzgestänge 22 von Interesse ist, verfügen die gefederten und/oder gedämpften Achsen 28 und 30 über eine in den folgenden Figuren näher erläuterte aktive Wankstabilisierung. Die effektive Wankstabilisierung des Fahrzeugs 10 wird im Wesentlichen durch eine sog. Kreuzschaltung der doppelt wirkenden Fluidzylinder einer Achse 28 und/oder 30 erreicht, mit denen der Fahrzeugaufbau 14 auf den Achsen 28 und 30 abgestützt ist, und bei der die Kolbenseite des Zylinders einer Seite mit der Ringseite des Zylinders der anderen Seite der jeweiligen Achse 28 und/oder 30 fluidisch gekoppelt ist, wie dies anhand der folgenden Figuren näher erläutert werden soll.

Wenn in diesem Zusammenhang sowie im Zusammenhang der gesamten Beschreibung sowie auch der Ansprüche von einer fluidischen Koppelung, einer fluidischen Druckübertragung oder generell von fluidisch arbeitenden Stellelementen bzw. Zylindern die Rede ist, so ist damit das Druckübertragungsmedium verallgemeinernd als Druckfluid bezeichnet, ohne dass dies einschränkend verstanden werden soll. Wenn also generell von einem Druckfluid die Rede ist, so kann dies sowohl eine hydraulische und damit flüssigkeitsbasierte Druckübertragung unter Verwendung eines weitgehend inkompressiblen Druckübertragungsmediums bedeuten. Mit dem allgemeinen Begriff des Druckfluids kann jedoch gleichermaßen auch eine pneumatische Druckübertragung unter Verwendung von Luft oder einem geeigneten Gas meinen, wobei hier das Druckübertragungsmedium unter steigendem Druck komprimiert wird, was bei der Auslegung der Komponenten zu berücksichtigen ist.

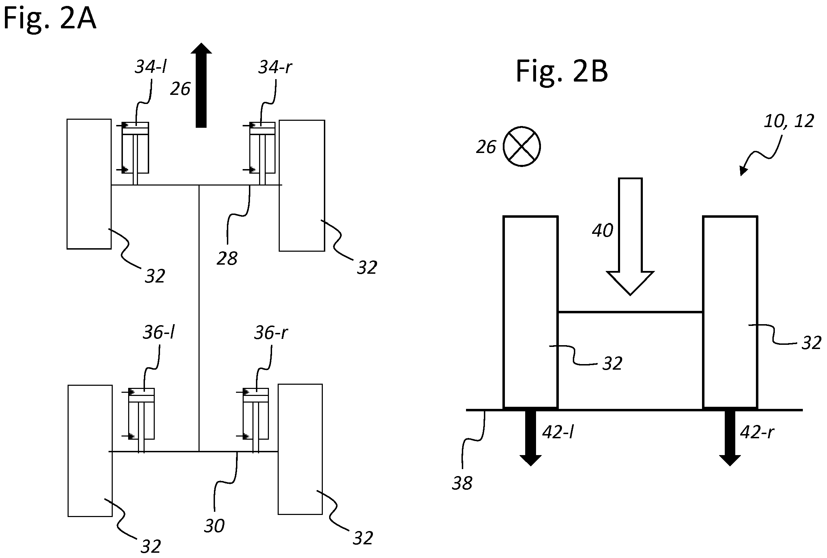

Die schematische Draufsicht der Fig. 2A zeigt die Anordnung der fluidischen Abstützung der Vorderachse 28 und der Hinterachse 30 des Fahrzeuges 10, bei dem der Aufbau 14 sowohl an der Vorderachse 28 über linksseitig und rechtsseitig angeordnete doppelt wirkende Fluidzylinder 34-l und 34-r als auch an der Hinterachse 30 über linksseitig und rechtsseitig angeordnete doppelt wirkende Fluidzylinder 36-l und 36-r auf bzw. gegenüber den Achsen 28 und 30 abgestützt ist. Die Fahrtrichtung 26 zeigt in der Abbildung der Fig. 2A nach oben, so dass sich auch die beiden linksseitig angeordneten Fluidzylinder 34-l (vorne) und 36-l (hinten) in der Darstellung der Fig. 2A jeweils links befinden, während sich die beiden rechtsseitig angeordneten Fluidzylinder 34-r (vorne) und 36-r (hinten) in der Darstellung jeweils rechts befinden.

Die schematische Heckansicht der Fig. 2B soll hier beispielhaft die Hinterachse 30 des Fahrzeuges 10 zeigen, deren beide Räder 32 sich auf ebenem, nicht geneigten Boden 38 befinden und bei mittigem Fahrzeugschwerpunkt 40 somit jeweils gleiche Radlasten 42-l am linken Hinterrad 32 sowie 42-r am rechten Hinterrad übertragen und in den Boden 38 einleiten. Entsprechend der in Fig. 2A gewählten Systematik zeigt somit die Fahrtrichtung 26 in die Zeichnungsebene hinein, da das Landfahrzeug 10 bzw. die Spritzvorrichtung 12 gemäß Fig. 1 (hier ohne das Spritzgestänge 22) von hinten gezeigt ist.

Im Folgenden wird aus Vereinfachungsgründen in der Regel von hydraulischen Komponenten anstelle von fluidischen Komponenten und von einer hydraulischen Druckübertragung gesprochen, was jedoch nicht einschränkend zu verstehen ist. Wenn in der nachfolgenden Figurenbeschreibung generell von hydraulischer Druckübertragung die Rede ist, so kann stattdessen auch eine fluidische Druckübertragung oder eine pneumatische Druckübertragung eingesetzt werden, was ggf. bei der Auswahl und/oder der Dimensionierung einiger der eingesetzten Komponenten zu berücksichtigen sein wird.

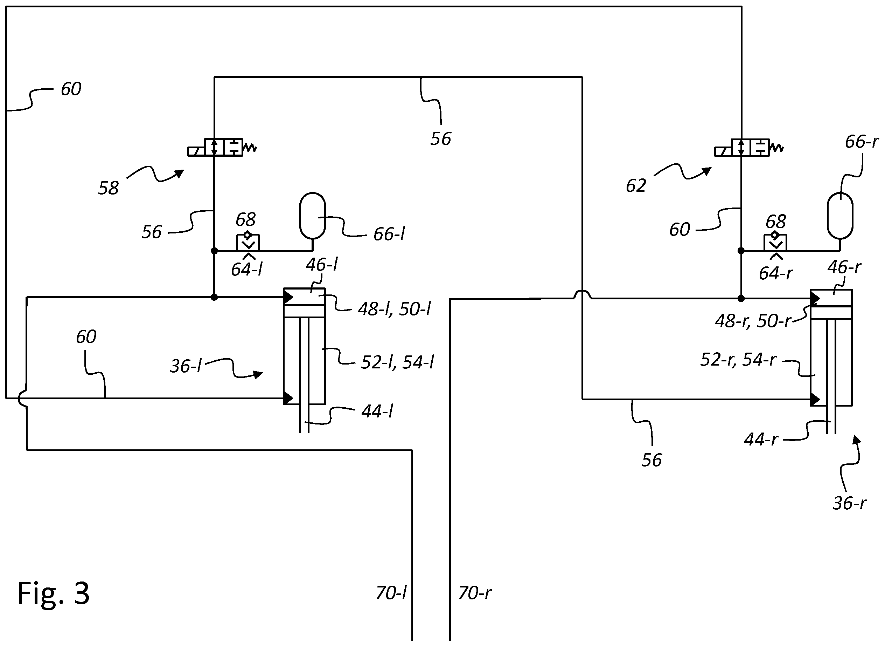

Das in stark vereinfachter Form dargestellte hydraulische Schaltbild der Fig. 3 verdeutlicht die für die hydraulische Kreuzschaltung der Hinterachse 30 in dem beschriebenen Fahrzustand wesentlichen Komponenten, wobei alle anderen, in diesem Fahr- bzw. Betriebszustand nicht erforderlichen bzw. nicht aktiven Komponenten der Hydraulikanordnung im Interesse einer besseren Übersichtlichkeit und besseren Verständlichkeit nicht eingezeichnet sind. Bei ebenem, nicht geneigtem, ggf. aber vielfältige Unebenheiten aufweisenden Boden 38 dient die gezeigte Hydraulikanordnung der variabel steuerbaren Wankstabilisierung zumindest der Hinterachse 30 des landwirtschaftlichen Fahrzeuges 10, die zu beiden Seiten mittels jeweils mindestens eines doppelt wirkenden Fluidzylinders bzw. Hydraulikzylinders 36-l und 36-r gegen den Fahrzeugaufbau 14 abgestützt ist. Wahlweise kann eine gleichartige Hydraulikschaltung auch an der Vorderachse 28 des Fahrzeuges 10 vorgesehen sein, wobei jedoch die Hinterachse 30 aufgrund ihrer Nähe zum heckseitig am Fahrzeug 10 angelenkten Spritzgestänge 22 als für die Lageregelung des Spritzgestänges 22 wichtiger anzusehen ist als die Vorderachse 28, die wahlweise auch ohne eine solche aktive Wankstabilisierung auskommen kann. Wie es die Fig. 2A jedoch andeutet, ist vorzugsweise auch die Vorderache 28 mit ihren beiden fluidischen Zylindern 34-l und 34-r mit einer solchen aktiven Wankstabilisierung ausgestattet.

Wie es die schematische Darstellung des hydraulischen Schaltbildes der Fig. 3 erkennen lässt, weist jeder der beiden doppelt wirkenden Zylinder 36-l und 36-r der Hinterachse 36 eine Kolbenstange 44-l bzw. 44-r auf, die den jeweiligen Zylinder 36-l bzw. 36-r an der Hinterachse 30 abstützt, während der Fahrzeugaufbau 14 über eine der Kolbenstange 44-l bzw. 44-r gegenüberliegenden oberen Stirnseite 46-l bzw. 46-r des jeweiligen Zylinders 36 abgestützt ist, so dass jeder der oberen Stirnseite 46-l, 46-r zugewandte Kolbenraum 48-l bzw. 48-r an der Kolbenseite 50 (50-l bzw. 50-r) des jeweiligen doppelt wirkenden Fluidzylinders 36 (36-l bzw. 36-r) der wenigstens einen Achse 30 unter der Gewichtsbelastung 40 des Fahrzeugaufbaus 14 mit Druck beaufschlagt wird, während ein Ringraum 52 (52-l bzw. 52-r) an der der Kolbenstange 44 (44-l bzw. 44-r) zugewandten jeweiligen Ringseite 54 (54-l bzw. 54-r) des Fluidzylinders 36 (36-l bzw. 36-r) entlastet bzw. zumindest mit etwas geringerer Last beaufschlagt wird und daher auch mit zumindest geringfügig geringerem Druck beaufschlagt ist als die Kolbenseite 50 (50-l bzw. 50-r).

Wie es die Fig. 3 erkennen lässt, ist die Kolbenseite 50-l mit dem Kolbenraum 48-l des linken Zylinders 36-l über eine erste Druckleitung 56, in der sich ein erstes schaltbares 2/2-Wege-Ventil 58 zum Absperren dieser Leitung 56 befindet, mit der Ringseite 54-r des rechten Zylinders 36-r verbunden bzw. fluidisch gekoppelt. Außerdem ist die Kolbenseite 50-r mit dem Kolbenraum 48-r des rechten Zylinders 36-r über eine zweite Druckleitung 60, in der sich ein zweites schaltbares 2/2-Wege-Ventil 62 zum Absperren dieser Leitung 60 befindet, mit der Ringseite 54-l des linkten Zylinders 36-l verbunden bzw. fluidisch gekoppelt, wodurch bei jeweils geöffneten und damit die Leitungen 56 und 60 durchlässig schaltenden Ventilen 58 und 62 eine hydraulische Kreuzschaltung zur Realisierung eines Wankstabilisierungsmodus gebildet ist.

Zur zusätzlichen Ausbildung einer hydraulischen Federung und/oder Dämpfung sind die Kolbenseiten 50 (50-l und 50-r) der beiden Zylinder jeweils über eine Drossel 64-l bzw. 64-r mit separaten Druckspeichern 66-l und 66-r gekoppelt. Jeder der Drosseln 64-l und 64-r ist ein Rückschlagventil 68 parallel geschaltet, damit bei einer Entlastung des Druckraumes der Kolbenseiten 50 der in den Druckspeichern 66 aufgebaute Druck schnell und ungehindert abgebaut werden kann, wodurch die Achse 30 an diesen Stellen jeweils schnell ausfedern kann, während aufgrund der Drosseln 64 der Druckaufbau in den Druckspeichern 66-l und 66-r langsamer vonstattengeht, wodurch eine höhere Druckdämpfung mit einer geringeren Zugdämpfung der Zylinder 36-l und 36-r realisiert ist. Die Durchlässigkeit der Drosseln 64 und die Fassungsvolumina der Druckspeicher 66 beeinflussen hierbei die Federungs- und Dämpfungscharakteristika der Fahrzeugfederung sowie der Dämpfung der Aufbaubewegungen.

Zusätzlich ist jede Kolbenseite 50 (50-l und 50-r) des linken sowie des rechten Zylinders 36-l und 36-r mit einem Druckanschluss 70-l bzw. 70-r für eine Niveauregelung an der rechten Seite wie auch an der linken Seite ausgestattet. Mit diesen Druckanschlüssen 70-l und 70-r kann die Aufbauhöhe in Abhängigkeit vom jeweiligen Fahrzeuggewicht, bspw. durch sich leerenden Spritzmitteltank 20 angepasst werden, indem die Druckniveaus der gesamten Hydrauliksysteme für die linke und die rechte Seite variiert und an verschiedene Belastungsfälle und/oder Fahrzeuggewichte bzw. Bodenverhältnisse angepasst werden können.

Die solcherart mittels der beschriebenen Kreuzschaltung realisierte Wankstabilisierung für das Fahrzeug 10 basiert auf dem Prinzip der Druckübertragung von der linken auf die rechte Seite, wenn der linke Zylinder 36-l bspw. durch eine Erhebung im Boden 38 plötzlich mit Druck beaufschlagt wird. In diesem Fall soll gleichzeitig die rechte Seite mit dem rechten Zylinder 36-l entlastet werden, was durch eine Druckübertragung auf die Ringseite 54-r der rechten Seite (rechter Zylinder 36-r) erfolgen kann. Auf diese Weise wankt das Fahrzeug 10 weniger ausgeprägt, wenn nur eine Seite ein- oder ausgelenkt wird, was mit der Wirkungsweise eines mechanischen Stabilisators vergleichbar ist. Es kann bzw. können also ein Volumen- und/oder ein Druckausgleich bei Bewegung der Federungszylinder 36-l und 36-r stattfinden.

Durch Verwendung nur jeweils eines Druckspeichers 66-l und 66-r ergibt sich eine relativ harte Federungscharakteristik (geringe Federwege, steile und progressive Federkennlinien); ebenso denkbar wäre es, eine solche Kreuzschaltung mit mehreren Hydrospeichern je Seite auszustatten, die ggf. über weitere, hier nicht dargestellte Ventile hinzu- oder bedarfsweise weggeschaltet werden könnten.

Die in den Figuren 2A, 2B und 3 gezeigte Anordnung mit der in Fig. 3 gezeigten Hydraulikschaltung kann typischerweise bei einer Feldfahrt des Fahrzeuges 10 bzw. der Spritzvorrichtung 12 in der Ebene oder bei leichtem Seitenhang zum Einsatz kommen.

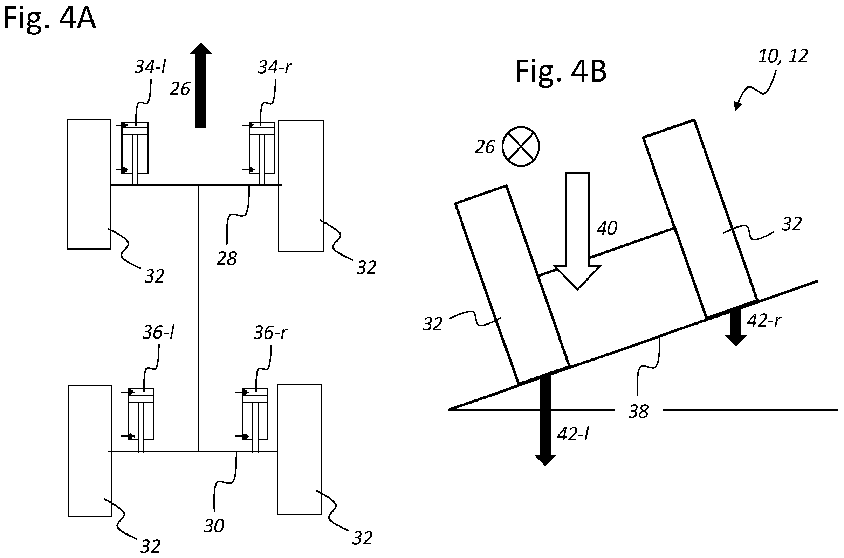

Die schematische Draufsicht der Fig. 4A entspricht dem bereits in Fig. 2A gezeigten Bild, während die schematische Heckansicht der Fig. 4B beispielhaft die Hinterachse 30 des Fahrzeuges 10 zeigen soll, deren beide Räder 32 sich auf stark geneigtem Boden 38 befinden und bei außermittigem Fahrzeugschwerpunkt 40 jeweils unterschiedliche Radlasten 42-l am linken Hinterrad 32 sowie 42-r am rechten Hinterrad 32 übertragen und in den Boden 38 einleiten. Wie es die Rückansicht auf die Hinterachse 30 zeigt, ist das Fahrzeug 10 stark nach links geneigt, so dass das linke Hinterrad 32 hangabwärts und das rechte Rad hangaufwärts angeordnet ist. Somit wirkt auf das linke Rad 32 eine deutlich höhere Radlast 42-l als auf das rechte Rad 32, das mit deutlich geringerer Radlast 42-r beaufschlagt wird.

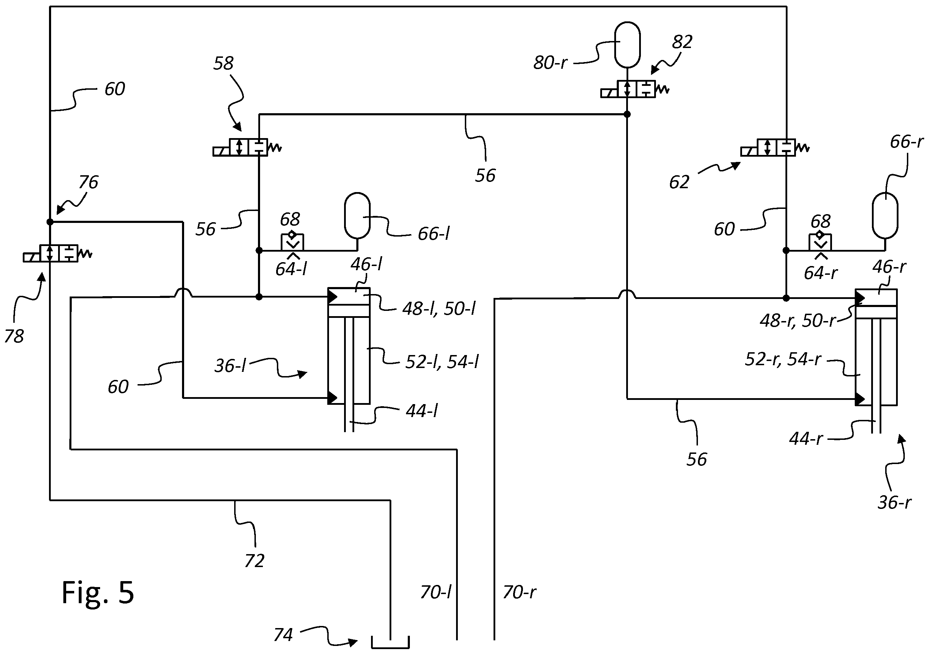

Kommt das Fahrzeug 10 entsprechend der in Fig. 4B gezeigten Fahrsituation in einen Seitenhang mit kritischer Seitenneigung, bei der das Fahrzeug 10 etwa knapp an eine Kippgrenze gerät, kommt die in Fig. 5 dargestellte Schaltungskonfiguration zum Einsatz. Wiederum sei darauf hingewiesen, dass das dargestellte hydraulische Schaltbild der Fig. 5 in stark vereinfachter Form die für die in Fig. 4B gezeigte Fahrsituation wesentlichen Komponenten in ihrem Zusammenwirken zeigt, wogegen alle anderen, in diesem Fahr- bzw. Betriebszustand nicht erforderlichen bzw. nicht aktiven Komponenten der Hydraulikanordnung im Interesse einer besseren Übersichtlichkeit und besseren Verständlichkeit nicht eingezeichnet sind. Die in Fig. 4B gezeigte Annäherung an die seitliche Kippgrenze des Fahrzeuges 10 mit den stark unterschiedlichen Radlasten 42-l und 42-r der linken und rechten Hinterräder 32 kann bspw. durch geeignete Drucksensoren an den druckführenden Leitungen und/oder an den Hydraulikzylindern 36, wahlweise auch durch Neigungssensoren oder mittels anderer geeigneter Sensoren erfasst und vom System verarbeitet werden.

Durch Schließen sowohl des ersten schaltbaren 2/2-Wege-Ventils 58 in der ersten Druckleitung 56 als auch des zweiten schaltbaren 2/2-Wege-Ventils 62 in der zweiten Druckleitung 60 wird die zuvor bestehende Kreuzschaltung (vgl. Fig. 3) aufgehoben und unterbrochen. Das Hydraulikfluid im linken Hydraulikzylinder 36-l kann aus dem Kolbenraum 48-l an der Kolbenseite 50-l nur noch in den zugeordneten Druckspeicher 66-l fließen, wobei die Verbindung zum linken Druckanschluss 70-l für die Niveauregelung der linken Seite unverändert offen bleibt. Gleiches gilt analog für die rechte Seite, bei der das Hydraulikfluid im rechten Hydraulikzylinder 36-r aus dem Kolbenraum 48-r an der Kolbenseite 50-r ebenfalls nur noch in den zugeordneten Druckspeicher 66-r fließen kann, wobei wiederum die Verbindung zum rechten Druckanschluss 70-r für die Niveauregelung der rechten Seite unverändert offen bleibt.

Wie es die Fig. 4B erkennen lässt, verursacht die deutlich höhere Radlast 42-l auf der linken Seite im linken Hydraulikkreis an der Kolbenseite 50-l des linken Zylinders 36-l und im linken Druckspeicher 66-l ein deutlich höheres Druckniveau als dies aufgrund der geringeren Radlast 42-r auf der rechten Seite des Hydraulikkreises der Fall ist. Da aber in diesem Betriebszustand eine ausgeprägte Wandabstützung wünschenswert ist, jedoch die linke Ringseite 54-l aufgrund des nunmehr geschlossenen zweiten Ventils 62 nicht mehr über den rechten Kolbenraum 48-r entlastet werden kann, sieht der in Fig. 5 gezeigte Stabilisierungsmodus nicht nur die Aufhebung der fluidischen Kreuzschaltung (vgl. Fig. 3) mit geschlossenen Ventilen 58 und 62 vor, wobei jede der beiden Kolbenseiten 50-l und 50-r der doppelt wirkenden Fluidzylinder 36-l und 36-r unter Absperrung der hydraulischen Verbindungen im Wesentlichen nur noch über die Drosselstellen 64-l und 64-r mit den jeweiligen Druckspeichern 66-l und 66-r gekoppelt sind. Der Stabilisierungsmodus, der im Wesentlichen zur Reduzierung und/oder Kompensierung eines am Schräghang stark seitlich geneigten Fahrzeugaufbaus beitragen soll, sieht zudem eine Druckentlastung der Ringseite 54-l des hangabwärts des Schräghangs liegenden doppelt wirkenden linken Fluidzylinders 36-l über eine schaltbare fluidische Tankverbindung bzw. eine hydraulische Tankleitung 72 zu einem zentralen Fluidtank oder zentralen Hydrauliktank 74 vor. Um diese Druckentlastung der linken Ringseite 54-l mit dem linken Ringraum 52-l zu ermöglichen, ist in der zweiten Druckleitung 60 eine Verzweigungsstelle 76 angeordnet, die über die hydraulische Tankleitung 72 zum zentralen Hydrauliktank 74 führt. Um diese hydraulische Tankleitung 72 im Stabilisierungsmodus schaltbar zu machen, ist in dieser Leitung 72 hinter der Verzweigungsstelle 76 ein drittes schaltbares 2/2-Wege-Ventil 78 angeordnet, das die Tankleitung 72 bei Bedarf und bei gleichzeitig versperrten ersten und zweiten Ventilen 58 und 62 öffnen kann. Bei geöffnetem dritten Ventil 78 wird der linke Zylinder 36-l von einem Differentialzylinder zu einem einfachwirkenden Zylinder umgeschaltet, da bei hohem Druckniveau auf der Kolbenseite 50-l ein vergleichsweise niedriges Druckniveau (z.B. weniger als fünf bar) auf der Ringseite 54-l herrscht. Das Ergebnis dieser Schaltstellungen der Ventile 58, 62 und 78 ist eine sehr effektive Wankabstützung bei starken Seitenhang (vgl. Fig. 4B).

Es sei an dieser Stelle darauf hingewiesen, dass die beschriebene Druckentlastung nicht zwingend über den Hydrauliktank 74 erfolgen muss, sondern auch über andere Druckfluidreservoirs erfolgen kann, ggf. unterstützt durch ein zur Ringseite 54-l öffnendes Rückschlagventil (nicht gezeigt), das in diesem Fall auch als Nachsaugventil angesehen bzw. bezeichnet werden kann, da es ein Rückströmen des Druckfluids vom jeweils druckentlasteten Ringraum 52 (in diesem Fall dem linken Ringraum 52-l) verhindert, wogegen es ein Nachsaugen zum Ringraum 52 hin erlaubt.

Für einen Druckausgleich auf der Ringseite 54-r des in dieser Fahrsituation am Seitenhang deutlich entlasteten rechten Zylinders 36-r kann ein weiterer Druckspeicher 80-r sorgen, der über ein viertes schaltbares 2/2-Wege-Ventil 82 direkt mit dem rechten Ringraum 52-r am rechten Zylinder 36-r verbunden und dort für eine weichere Federkennlinie sorgen kann.

Es sei an dieser Stelle nochmals betont, dass in der Darstellung der Fig. 5 einige wichtige Komponenten fehlen, die für die einwandfreie Funktion der Hydraulikschaltung unverzichtbar sind, so etwa die für einen symmetrischen Aufbau notwendigen Komponenten und Ventile. Da die Fig. 5 nur die für eine stärkere Belastung der linken Achsseite gemäß Fig. 4B notwendigen dritten und vierten Ventile 78 und 82 sowie die entsprechend damit geschalteten Komponenten wie die mit dem dritten Ventil 78 zuschaltbare hydraulische Tankleitung 72 und den mit dem vierten Ventil 82 mit der Ringseite 54-r des rechten Zylinders 36-r koppelbaren weiteren Druckspeicher 80-r zeigt, sind die entsprechenden Komponenten, die für eine umgekehrte Belastungssituation mit stärker belasteter rechten Achsseite unverzichtbar wären, weggelassen. In der Praxis sind diese Komponenten jedoch vorhanden, was eine entsprechende verbesserte Abstützung des Fahrzeuges 10 bei jeglicher Seitenneigung unter Deaktivierung der in Fig. 3 erläuterten Kreuzschaltung der doppelt wirkenden Zylinder 36-l und 36-r an der Hinterachse 30 des Fahrzeuges 10 ermöglicht.

Gleichermaßen sei darauf hingewiesen, dass eine entsprechende Verschaltung auch der doppelt wirkenden Hydraulikzylinder 34-l und 34-r der Vorderachse 28 möglich ist und sinnvoll sein kann, um eine noch effektivere Wankstabilisierung und Neigungsstabilisierung des Fahrzeuges 10 zu ermöglichen.

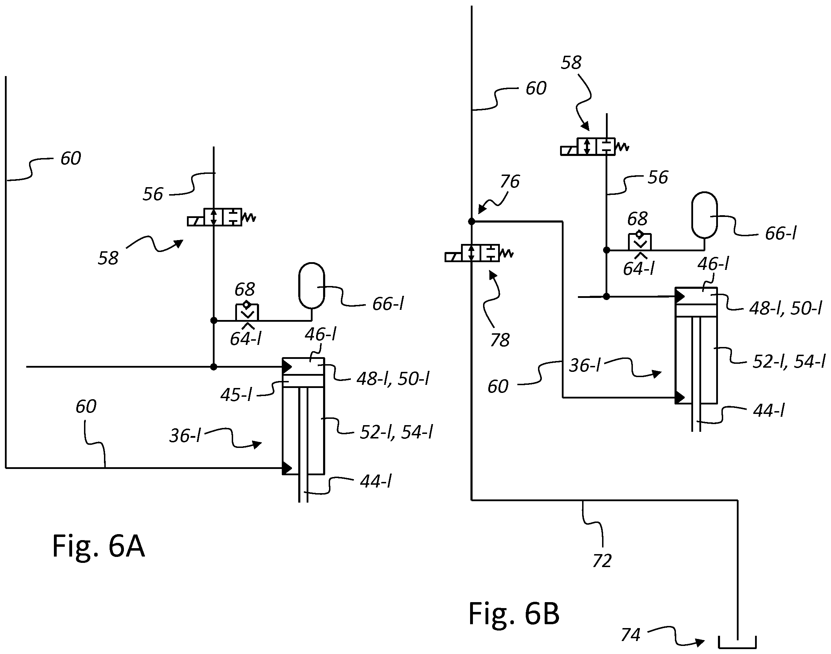

Die Detailansichten der Figuren 6A und 6B verdeutlichen in Ausschnitten aus den schematischen Blockschaltbildern der Fig. 3 (Ausschnitt in Fig. 6A) und der Fig. 5 (Ausschnitt in Fig. 6B) die hydraulischen Drücke und wirksamen Kolbenflächen des linken Zylinders 36-l, der zwischen dem ersten Betriebsmodus und dem zweiten Betriebsmodus umgeschaltet werden kann.

So ist, wie dies bereits anhand der Fig. 3 für den ersten Betriebsmodus beschrieben wurde, bei geöffnetem ersten 2/2-Wege-Ventil 58 die erste Druckleitung 56 freigeschaltet, wodurch der linke Kolbenraum 48-l des linken Zylinders 36-l mit dem rechten Ringraum 52-r des rechten Zylinders 36-r fluidisch gekoppelt ist (vgl. Fig. 3). Zudem ist bei geöffnetem zweiten 2/2-Wege-Ventil 62 die zweite Druckleitung 60 freigeschaltet, wodurch der rechte Kolbenraum 48-r des rechten Zylinders 36-r mit dem linken Ringraum 52-l des linken Zylinders 36-l fluidisch gekoppelt ist (vgl. Fig. 3), was in Zusammenwirkung dem in Fig. 3 veranschaulichten ersten Betriebsmodus mit der darin realisierten Kreuzschaltung entspricht (siehe hierzu Fig. 6A).

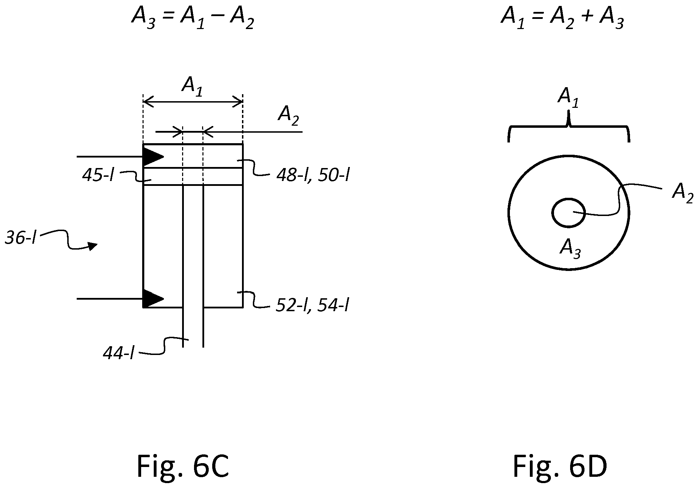

Die für die Druckverhältnisse beim Heben und Senken des Kolbens 45-l wirksamen Flächen am linken Kolben 45-l ergeben sich daher im ersten Betriebsmodus (Fig. 3, Fig. 6A) aufgrund der im System herrschenden Drücke im Wesentlichen durch die von der Kolbenstange 44-l beanspruchten Fläche A₂ (vgl. Fig. 6C, Fig. 6D). Gleichermaßen lassen sich die auf den linken Kolben 45-l insgesamt wirkenden Drücke als proportional zu einer Differenz aus der Fläche A₁ des Kolbens 45-l an der Kolbenseite 50-l und einer effektiv wirksamen Fläche A₃ des Kolbens 45-l an der Ringseite 54-l errechnen. Diese an der Ringseite 54-l befindliche effektive Fläche A₃ ergibt sich aus der Differenz der Gesamtfläche A₁ des Kolbens 45-l und der an der Ringseitenfläche A₃ fehlenden Fläche A₂, die durch die Kolbenstange 44-l beansprucht wird. Dagegen wird die wirksame Fläche im zweiten Betriebsmodus im Wesentlichen durch die Fläche A₁ des Kolbens 45-l gebildet, wie anhand der Figuren 6B und 6C erläutert wird.

Die Figuren 6C und 6D verdeutlichen den Zusammenhang der von beiden Seiten auf den Kolben 45-l wirkenden Druckkräfte, die von den wirksamen Flächen A_{1,} A₂ und A₃ abhängen bzw. zu diesen proportional sind. Die Fläche A1 ist die zum Kolbenraum 48-l weisende Gesamtfläche des Kolbens 45-l, während A₃ die Fläche der zum Ringraum 52-l weisenden Unterseite des Kolbens 45-l ist, die jedoch um A₂, nämlich die mittig von der Kolbenstange 44-l beanspruchte Fläche, reduziert ist (vgl. Fig. 6C, Fig. 6D). Die von der Kolbenstange 44-l beanspruchte Fläche A₂ errechnet sich gemäß Fig. 6C zu: A₃ = A₁ - A₂ bzw. umgestellt: A₂ = A₁ - A₃. Da die wirksame Kraft bei einem doppeltwirkenden Zylinder das Produkt aus der Fläche, auf welche die Kraft einwirkt, und dem an der Fläche anliegenden Druck ist, stellt die für die Druckverhältnisse wirksame Fläche A₂ auch die für am Zylinder 36-l bzw. an dessen Kolben 45-l im ersten Betriebsmodus anliegenden Kräfte relevante Fläche dar, insbesondere bei vergleichbaren Druckverhältnissen im Kolbenraum 48-l und im Ringraum 52-l.

Wie es weiterhin die Fig. 6B für den zweiten Betriebsmodus veranschaulicht (siehe hierzu auch die Fig. 5), ist bei versperrtem ersten 2/2-Wege-Ventil 58 die erste Druckleitung 56 versperrt, wodurch der linke Kolbenraum 48-l des linken Zylinders 36-l allenfalls noch über die Drossel 64-l mit dem linken Druckspeicher 66-l verbunden und ansonsten gegenüber weiteren Komponenten fluidisch abgeschlossen ist (vgl. Fig. 5). Zudem ist auch bei versperrtem zweiten 2/2-Wege-Ventil 62 die zweite Druckleitung 60 versperrt, wodurch der rechte Kolbenraum 48-r des rechten Zylinders 36-r nicht mehr mit dem linken Ringraum 52-l des linken Zylinders 36-l fluidisch gekoppelt ist (vgl. Fig. 5), was insgesamt dem in Fig. 5 veranschaulichten zweiten Betriebsmodus mit der aufgehobenen Kreuzschaltung entspricht (siehe hierzu Fig. 6A).

Außerdem ist in diesem zweiten Betriebsmodus die linke Ringseite 54-l mit dem linken Ringraum 52-l über das geöffnete dritte 2/2-Wege-Ventil 78 und über die druckentlastende hydraulische Tankleitung 72 mit dem zentralen Hydrauliktank 74 verbunden und dadurch weitgehend druckentlastet. Bei druckentlasteter Ringseite 54-l ist daher nur noch die Kolbenseite 50-l für die Abstützung des Fahrzeuges 10 gegen die hangabwärts gerichtete Seite wirksam, während die druckentlastete Ringseite 54-l keinen Gegendruck gegen die verstärkte Abstützung auf der Kolbenseite 50-l ausübt.

Als für die Druckverhältnisse wirksame Fläche am linken Kolben 45-l verbleibt daher im zweiten Betriebsmodus (Fig. 5, Fig. 6B) aufgrund der im System herrschenden Drücke nur noch die zum Kolbenraum 48-l weisende Gesamtfläche A₁ des Kolbens 45-l, die in diesem Fall auch die für die Druckverhältnisse alleine wirksame Fläche A₁ bildet.

Wenn auch im Zusammenhang der Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Artikel und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise des erfindungsgemäßen Fahrwerks ein besseres Verständnis für den in den Ansprüchen sowie im allgemeinen Teil der Beschreibung allgemeiner und/oder abstrakter formulierten Erfindungsgedanken abzuleiten.

Abschließend sei darauf hingewiesen, dass die Erfindung unter Bezugnahme auf bevorzugte Ausführungsformen unter Verwendung der Figuren 1 bis 6D beschrieben wurde. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Fahrzeug, Landfahrzeug, landwirtschaftliches Fahrzeug
- 12: Spritzvorrichtung, selbstfahrende Spritzvorrichtung, landwirtschaftliche Spritzvorrichtung, landwirtschaftliches Spritzfahrzeug
- 14: Fahrzeugaufbau, Aufbau
- 16: Antriebsmotor, frontseitiger Antriebsmotor
- 18: Fahrerkabine
- 20: Spritzmitteltank
- 22: Spritzgestänge, heckseitiges Spritzgestänge
- 24: Auslegerarm, Auslegerarme
- 26: Fahrtrichtung
- 28: Vorderachse
- 30: Hinterachse
- 32: Rad, Fahrzeugrad
- 34: Zylinder, doppelt wirkender Fluidzylinder, Hydraulikzylinder, doppelt wirkender Hydraulikzylinder (Vorderachse)
- 34-l: linker Zylinder, linksseitiger Zylinder, linker doppelt wirkender Fluidzylinder, linker Hydraulikzylinder (Vorderachse)
- 34-r: rechter Zylinder, rechtsseitiger Zylinder, rechter doppelt wirkender Fluidzylinder, rechter Hydraulikzylinder (Vorderachse)
- 36: Zylinder, doppelt wirkender Fluidzylinder, Hydraulikzylinder, doppelt wirkender Hydraulikzylinder (Hinterachse)
- 36-l: linker Zylinder, linksseitiger Zylinder, linker doppelt wirkender Fluidzylinder, linker Hydraulikzylinder (Hinterachse)
- 36-r: rechter Zylinder, rechtsseitiger Zylinder, rechter doppelt wirkender Fluidzylinder, rechter Hydraulikzylinder (Hinterachse)
- 38: Boden
- 40: Schwerpunkt, Fahrzeugschwerpunkt
- 42-l: linke Radlast, Radlast (links)
- 42-r: rechte Radlast, Radlast (rechts)
- 44: Kolbenstange
- 44-l: linke Kolbenstange
- 44-r: rechte Kolbenstange
- 45: Kolben
- 45-l: linker Kolben
- 46: obere Stirnseite (Zylinder)
- 46-l: linke obere Stirnseite, obere Stirnseite des linken Zylinders
- 46-r: rechte obere Stirnseite, obere Stirnseite des rechten Zylinders
- 48: Kolbenraum
- 48-l: linker Kolbenraum, Kolbenraum des linken Zylinders
- 48-r: rechter Kolbenraum, Kolbenraum des rechten Zylinders
- 50: Kolbenseite
- 50-l: linke Kolbenseite, Kolbenseite des linken Zylinders
- 50-r: rechte Kolbenseite, Kolbenseite des rechten Zylinders
- 52: Ringraum
- 52-l: linker Ringraum, Ringraum des linken Zylinders
- 52-r: rechter Ringraum, Ringraum des rechten Zylinders
- 54: Ringseite
- 54-l: linke Ringseite, Ringseite des linken Zylinders
- 54-r: rechte Ringseite, Ringseite des rechten Zylinders
- 56: erste Druckleitung
- 58: erstes 2/2-Wege-Ventil
- 60: zweite Druckleitung
- 62: zweites 2/2-Wege-Ventil
- 64: Drossel
- 64-l: linke Drossel, Drossel an linkem Zylinder
- 64-r: rechte Drossel, Drossel an rechtem Zylinder
- 66: Druckspeicher
- 66-l: linker Druckspeicher, Druckspeicher an linkem Zylinder
- 66-r: rechter Druckspeicher, Druckspeicher an rechtem Zylinder
- 68: Rückschlagventil
- 70-l: linker Druckanschluss für Niveauregelung
- 70-r: rechter Druckanschluss für Niveauregelung
- 72: druckentlastende fluidische Verbindung, Tankleitung, hydraulische Tankleitung
- 74: Tank, Hydrauliktank, zentraler Hydrauliktank
- 76: Verzweigungsstelle
- 78: drittes 2/2-Wege-Ventil
- 80-r: weiterer Druckspeicher
- 82: viertes 2/2-Wege-Ventil
- A₁: erste Fläche (Kolbenseite)
- A₂: zweite Fläche (Kolbenstange)
- A₃: dritte Fläche, resultierende Fläche (Ringseite)

## Patentansprüche

1. Fahrwerk für ein durch eine selbstfahrende landwirtschaftliche Spritzvorrichtung (12) gebildetes Landfahrzeug (10) mit wenigstens einer gegenüber einem Fahrzeugaufbau (14) fluidisch gefederten und/oder gedämpften Achse (28, 30), die zu beiden Seiten des Fahrzeuges (10) mittels jeweils mindestens eines doppelt wirkenden Fluidzylinders (34, 34-l, 34-r, 36, 36-l, 36-r) gegen den Fahrzeugaufbau (14) abgestützt ist, **dadurch gekennzeichnet,**
• **dass** jede Kolbenseite (50, 50-l, 50-r) der mindestens zwei doppelt wirkenden Fluidzylinder (34, 34-l, 34-r, 36, 36-l, 36-r) der wenigstens einen Achse (28, 30) unter der Gewichtsbelastung des Fahrzeugaufbaus (14) mit Druck beaufschlagt ist,
• **dass** in einem ersten Betriebsmodus die wenigstens eine Achse (28, 30) unter Einbeziehung der Kolbenseiten (50, 50-l, 50-r) und der Ringseiten (54, 54-l, 54-r) der Fluidzylinder (34, 34-l, 34-r, 36, 36-l, 36-r) gefedert und/oder gedämpft ist,
• und **dass** in einem zweiten Betriebsmodus zur Reduzierung und/oder Kompensierung eines am Schräghang stark seitlich geneigten Fahrzeugaufbaus (14) jede der beiden Kolbenseiten (50, 50-l, 50-r) der doppelt wirkenden Fluidzylinder (34, 34-l, 34-r, 36, 36-l, 36-r) von weiteren fluidischen Verbindungen abgesperrt sind,
• während zumindest die Ringseite (54, 54-l, 54-r) des hangabwärts des Schräghangs liegenden doppelt wirkenden Fluidzylinders (34, 34-l, 34-r, 36, 36-l, 36-r) über eine schaltbare fluidische Verbindung (72) druckentlastbar ist, und wobei bei dem im ersten Betriebsmodus im hangabwärts des Schräghangs liegenden doppelt wirkenden Fluidzylinder (34, 34-l, 34-r, 36, 36-l, 36-r) die für die Druckverhältnisse wirksame Fläche (A₂) im Wesentlichen eine von der Kolbenstange (44) beanspruchte Fläche (A₂) ist und/oder durch eine Differenz aus einer Fläche (A₁) des Kolbens (45) an der Kolbenseite (50, 50-l, 50-r) und einer wirksamen Fläche (A₃) des Kolbens (45) an der Ringseite (54, 54-l, 54-r) gebildet ist, wobei die wirksame Fläche im zweiten Betriebsmodus im Wesentlichen durch die Fläche (A₁) des Kolbens (45) gebildet ist.

2. Fahrwerk nach Anspruch 1, bei dem im zweiten Betriebsmodus zumindest die Ringseite (54, 54-l, 54-r) des hangabwärts des Schräghangs liegenden doppelt wirkenden Fluidzylinders (34, 34-l, 34-r, 36, 36-l, 36-r) über eine schaltbare fluidische Tankverbindung (72) zu einem zentralen Fluidtank (74) druckentlastet ist.

3. Fahrwerk nach Anspruch 1 oder 2, bei dem im ersten Betriebsmodus zur Ausbildung einer fluidischen Kreuzschaltung eine Kolbenseite (50, 50-l, 50-r) des doppelt wirkenden Fluidzylinders (34, 34-l, 34-r, 36, 36-l, 36-r) an einer ersten Seite der Achse (28, 30) jeweils mit der Ringseite (54, 54-l, 54-r) des doppelt wirkenden Fluidzylinders (34, 34-l, 34-r, 36, 36-l, 36-r) an einer zweiten Seite der Achse (28, 30) fluidisch gekoppelt ist, wobei eine Ringseite (54, 54-l, 54-r) des doppelt wirkenden Fluidzylinders (34, 34-l, 34-r, 36, 36-l, 36-r) an der ersten Seite der Achse (28, 30) jeweils mit der Kolbenseite (50, 50-l, 50-r) des doppelt wirkenden Fluidzylinders (34, 34-l, 34-r, 36, 36-l, 36-r) an der zweiten Seite der Achse (28, 30) fluidisch gekoppelt ist.

4. Fahrwerk nach einem der Ansprüche 1 bis 3, bei dem jede der beiden Kolbenseiten (50, 50-l, 50-r) über jeweils eine Drosselstelle (64, 64-l, 64-r) mit parallel angeordnetem Rückschlagventil (68) mit einem separaten Druckspeicher (66, 66-l, 66-r) gekoppelt bzw. koppelbar ist.

5. Fahrwerk nach Anspruch 4, bei dem im zweiten Betriebsmodus unter Aufhebung der fluidischen Kreuzschaltung jede der beiden Kolbenseiten (50, 50-l, 50-r) der doppelt wirkenden Fluidzylinder (34, 34-l, 34-r, 36, 36-l, 36-r) unter Absperrung aller übrigen fluidischen Verbindungen nur noch über die Drosselstellen (64, 64-l, 64-r) mit den jeweiligen Druckspeichern (66, 66-l, 66-r) gekoppelt sind.

6. Fahrwerk nach einem der Ansprüche 1 bis 5, bei dem die Ringseite (54, 54-l, 54-r) des hangaufwärts des Schräghangs liegenden doppelt wirkenden Fluidzylinders (34, 34-l, 34-r, 36, 36-l, 36-r) über eine schaltbare Verbindung (82) zu einem weiteren Druckspeicher (80-r) koppelbar ist.

7. Fahrwerk nach einem der Ansprüche 1 bis 6, bei dem eine Neigung des Fahrzeugaufbaus (14) um eine Fahrzeuglängsachse und damit ein Fahrzustand mit Hangschräglauf mittels wenigstens eines mit dem Fahrzeugaufbau (14) gekoppelten Neigungssensors erfassbar sind.

8. Fahrwerk nach einem der Ansprüche 1 bis 7, bei dem eine Neigung des Fahrzeugaufbaus (14) um eine Fahrzeuglängsachse und damit ein Fahrzustand mit Hangschräglauf mittels wenigstens eines mit dem Fluidkreislauf der fluidisch gefederten und/oder gedämpften Achse (28, 30) des Landfahrzeuges (10) gekoppelten Drucksensors erfassbar sind.

9. Fahrwerk nach Anspruch 8, bei dem jeweils mindestens ein Drucksensor in einer Druckleitung der jeweiligen Kolbenseite (50, 50-l, 50-r) der beiden doppelt wirkenden Fluidzylinder (34, 34-l, 34-r, 36, 36-l, 36-r) der mindestens einen Achse (28, 30) des Landfahrzeuges (10) vorgesehen bzw. angeordnet ist.

10. Fahrwerk nach einem der Ansprüche 1 bis 9, das zwei unabhängig voneinander fluidisch gefederte und/oder gedämpfte Achsen (28, 30) mit jeweils mindestens zwei an den Längsseiten des Fahrzeuges (10) angeordneten Rädern (32) umfasst, wobei die beiden doppelt wirkenden Fluidzylinder (34, 34-l, 34-r, 36, 36-l, 36-r) mindestens einer der wenigstens zwei Achsen (28, 30) im ersten und/oder zweiten Betriebsmodus betreibbar sind.

11. Verfahren zur Federung- und/oder Dämpfungssteuerung wenigstens einer gegenüber einem Fahrzeugaufbau (14) fluidisch gefederten und/oder gedämpften Achse (28, 30) eines durch eine selbstfahrende landwirtschaftliche Spritzvorrichtung (12) gebildeten Landfahrzeuges (10), insbesondere zur variabel steuerbaren Wankstabilisierung wenigstens einer Achse (28, 30) eines landwirtschaftlichen Fahrzeuges (10), die zu beiden Seiten mittels jeweils mindestens eines doppelt wirkenden Fluidzylinders (34, 34-l, 34-r, 36, 36-l, 36-r) gegen den Fahrzeugaufbau (14) abgestützt ist, **dadurch gekennzeichnet,**
• **dass** jede Kolbenseite (50, 50-l, 50r) der mindestens zwei doppelt wirkenden Fluidzylinder (34, 34-l, 34-r, 36, 36-l, 36-r) der wenigstens einen Achse (28, 30) unter der Gewichtsbelastung des Fahrzeugaufbaus (14) mit Druck beaufschlagt wird,
• **dass** in einem ersten Betriebsmodus die wenigstens eine Achse (28, 30) unter Einbeziehung der Kolbenseiten (50, 50-l, 50-r) und der Ringseiten (54, 54-l, 54-r) der Fluidzylinder (34, 34-l, 34-r, 36, 36-l, 36-r) gefedert und/oder gedämpft wird,
• und **dass** in einem zweiten Betriebsmodus zur Reduzierung und/oder Kompensierung eines am Schräghang stark seitlich geneigten Fahrzeugaufbaus (14) jede der beiden Kolbenseiten (50, 50-l, 50r) der doppelt wirkenden Fluidzylinder (34, 34-l, 34-r, 36, 36-l, 36-r) von weiteren fluidischen Verbindungen abgesperrt werden,
• während zumindest die Ringseite (54, 54-l, 54r) des hangabwärts des Schräghangs liegenden doppelt wirkenden Fluidzylinders (34, 34-l, 34-r, 36, 36-l, 36-r) über eine schaltbare fluidische Verbindung (72) druckentlastet wird, wobei bei dem im ersten Betriebsmodus im hangabwärts des Schräghangs liegenden doppelt wirkenden Fluidzylinder (34, 34-l, 34-r, 36, 36-l, 36-r) die für die Druckverhältnisse wirksame Fläche (A₂) im Wesentlichen eine von der Kolbenstange (44) beanspruchte Fläche (A₂) ist und/oder durch eine Differenz aus einer Fläche (A₁) des Kolbens (45) an der Kolbenseite (50, 50-l, 50-r) und einer wirksamen Fläche (A₃) des Kolbens (45) an der Ringseite (54, 54-l, 54-r) gebildet wird, wobei die wirksame Fläche im zweiten Betriebsmodus im Wesentlichen durch die Fläche (A₁) des Kolbens (45) gebildet wird.

12. Verfahren nach Anspruch 11, bei dem im zweiten Betriebsmodus zumindest die Ringseite (54, 54-l, 54r) des hangabwärts des Schräghangs liegenden doppelt wirkenden Fluidzylinders (34, 34-l, 34-r, 36, 36-l, 36-r) über eine schaltbare fluidische Tankverbindung (72) zu einem zentralen Fluidtank (74) druckentlastet wird.

13. Verfahren nach Anspruch 11 oder 12, bei dem im ersten Betriebsmodus zur Ausbildung einer fluidischen Kreuzschaltung eine Kolbenseite (50, 50-l, 50r) des doppelt wirkenden Fluidzylinders (34, 34-l, 34-r, 36, 36-l, 36-r) an einer ersten Seite der Achse (28, 30) jeweils mit der Ringseite (54, 54-l, 54r) des doppelt wirkenden Fluidzylinders (34, 34-l, 34-r, 36, 36-l, 36-r) an einer zweiten Seite der Achse (28, 30) fluidisch gekoppelt wird, wobei eine Ringseite (54, 54-l, 54r) des doppelt wirkenden Fluidzylinders (34, 34-l, 34-r, 36, 36-l, 36-r) an der ersten Seite der Achse (28, 30) jeweils mit der Kolbenseite (50, 50-l, 50r) des doppelt wirkenden Fluidzylinders (34, 34-l, 34-r, 36, 36-l, 36-r) an der zweiten Seite der Achse (28, 30) fluidisch gekoppelt wird.

14. Verfahren nach Anspruch 13, bei dem jede der beiden Kolbenseiten (50, 50-l, 50r) über jeweils eine Drosselstelle (64, 64-l, 64-r) mit parallel angeordnetem Rückschlagventil (68) mit einem separaten Druckspeicher (66, 66-l, 66-r) gekoppelt ist.

15. Verfahren nach Anspruch 13 oder 14, bei dem die Ringseite (54, 54-l, 54r) des hangaufwärts des Schräghangs liegenden doppelt wirkenden Fluidzylinders (34, 34-l, 34-r, 36, 36-l, 36-r) über eine schaltbare Verbindung (82) zu einem weiteren Druckspeicher (80-r) gekoppelt wird.

16. Verfahren nach einem der Ansprüche 11 bis 15, bei dem eine Neigung des Fahrzeugaufbaus (14) um eine Fahrzeuglängsachse und damit ein Fahrzustand mit Hangschräglauf mittels wenigstens eines mit dem Fahrzeugaufbau (14) gekoppelten Neigungssensors erfasst werden.

17. Verfahren nach einem der Ansprüche 11 bis 16, bei dem eine Neigung des Fahrzeugaufbaus (14) um eine Fahrzeuglängsachse und damit ein Fahrzustand mit Hangschräglauf mittels wenigstens eines mit dem Fluidkreislauf der fluidisch gefederten und/oder gedämpften Achse (28, 30) des Landfahrzeuges (10) gekoppelten Drucksensors erfasst werden.

18. Verfahren nach Anspruch 17, bei dem jeweils mindestens ein Drucksensor in einer Druckleitung der jeweiligen Kolbenseite (50, 50-l, 50r) der beiden doppelt wirkenden Fluidzylinder (34, 34-l, 34-r, 36, 36-l, 36-r) der mindestens einen Achse (28, 30) des Landfahrzeuges (10) vorgesehen ist.

## Claims

1. A carriage for a farm vehicle (10) formed by a self-propelled agricultural spray device (12), having at least one axle (28, 30) that is fluidically sprung and/or damped relative to a vehicle superstructure (14), which axle (28, 30) is supported against the vehicle superstructure (14) on both sides of the vehicle (10) in each case by means of at least one double-acting fluid cylinder (34, 34-l, 34-r, 36, 36-l, 36-r), **characterised**
• **in that** each piston side (50, 50-l, 50-r) of the at least two double-acting fluid cylinders (34, 34-l, 34-r, 36, 36-l, 36-r) of the at least one axle (28, 30) is pressurised under the weight load of the vehicle superstructure (14);
• **in that** the at least one axle (28, 30) is sprung and/or damped under inclusion of the piston sides (50, 50-l, 50-r) and the ring sides (54, 54-l, 54-r) of the fluid cylinders (34, 34-l, 34-r, 36, 36-l, 36-r) in a first operating mode;
• and **in that** each of the two piston sides (50, 50-l, 50-r) of the double-acting fluid cylinders (34, 34-l, 34-r, 36, 36-l, 36-r) is shut off from further fluidic connections in a second operating mode for the purpose of reducing and/or compensating for the strong lateral inclination of a vehicle superstructure (14) on a slope,
• while at least the ring side (54, 54-l, 54-r) of the double-acting fluid cylinder (34, 34-l, 34-r, 36, 36-l, 36-r) located downslope of the slope is pressure-relievable by way of a switchable fluidic connection (72), and wherein the surface (A₂) effective in the first operating mode for the compression ratios of the double-acting fluid cylinder (34, 34-l, 34-r, 36, 36-l, 36-r) located downslope of the slope is essentially a surface (A₂) taken up by the piston rod (44), and/or is formed by a difference between a surface (A₁) of the piston (45) on the piston side (50, 50-l, 50-r) and an effective surface (A₃) of the piston (45) on the ring side (54, 54-l, 54-r), wherein the effective surface in the second operating mode is formed essentially by the surface (A₁) of the piston (45).

2. The carriage according to claim 1, in which at least the ring side (54, 54-I, 54-r) of the double-acting fluid cylinder (34, 34-I, 34-r, 36, 36-I, 36-r) located downslope of the slope is pressure-relieved in the second operating mode by way of a switchable fluidic tank connection (72) to a central fluid tank (74).

3. The carriage according to claim 1 or 2, in which, in the first operating mode, a piston side (50, 50-I, 50-r) of the double-acting fluid cylinder (34, 34-I, 34-r, 36, 36-I, 36-r) on a first side of the axle (28, 30) is fluidically coupled in each case with the ring side (54, 54-I, 54-r) of the double-acting fluid cylinder (34, 34-I, 34-r, 36, 36-I, 36-r) on a second side of the axle (28, 30) for the purpose of forming a fluidic cross connection, wherein a ring side (54, 54-I, 54-r) of the double-acting fluid cylinder (34, 34-I, 34-r, 36, 36-I, 36-r) on the first side of the axle (28, 30) is in each case fluidically coupled with the piston side (50, 50-I, 50-r) of the double-acting fluid cylinder (34, 34-I, 34-r, 36, 36-I, 36-r) on the second side of the axle (28, 30).

4. The carriage according to one of the claims 1 to 3, in which each of the two piston sides (50, 50-I, 50-r) is coupled or coupleable, as the case may be, with a separate pressure storage (66, 66-l, 66-r), in each case by way of a throttle point (64, 64-l, 64-r) having a parallelly arranged check valve (68).

5. The carriage according to claim 4, in which, in the second operating mode under disconnection of the fluidic cross connection, each of the two piston sides (50, 50-I, 50-r) of the double-acting fluid cylinders (34, 34-l, 34-r, 36, 36-l, 36-r) remains coupled with the particular pressure storage (66, 66-l, 66-r) only by way of the throttle points (64, 64-l, 64-r) under shutoff of all other fluidic connections.

6. The carriage according to one of the claims 1 to 5, in which the ring side (54, 54-I, 54-r) of the double-acting fluid cylinder (34, 34-l, 34-r, 36, 36-l, 36-r) located upslope of the slope is coupleable to a further pressure storage (80-r) by way of a switchable connection (82).

7. The carriage according to one of the claims 1 to 6, in which an inclination of the vehicle superstructure (14) about a longitudinal axis of the vehicle and therewith a driving condition with slope inclination are detectable by means of at least one inclination sensor coupled with the vehicle superstructure (14).

8. The carriage according to one of the claims 1 to 7, in which an inclination of the vehicle superstructure (14) about a longitudinal axis of the vehicle and therewith a driving condition with slope inclination are detectable by means of at least one pressure sensor coupled with the fluid circuit of the fluidically sprung and/or damped axle (28, 30) of the farm vehicle (10).

9. The carriage according to claim 8, in which in each case at least one pressure sensor is provided or arranged, as the case may be, in a pressure line of the particular piston side (50, 50-l, 50-r) of the two double-acting fluid cylinders (34, 34-1, 34-r, 36, 36-1, 36-r) of the at least one axle (28, 30) of the farm vehicle (10).

10. The carriage according to one of the claims 1 to 9, which comprises two axles (28, 30) fluidically sprung and/or damped independently of one another, each with at least two wheels (32) arranged on the longitudinal sides of the vehicle (10), wherein the two double-acting fluid cylinders (34, 34-l, 34-r, 36, 36-l, 36-r) of at least one of the at least two axles (28, 30) are operable in the first and/or second operating mode.

11. A method for spring control and/or damping control of at least one axle (28, 30) of a farm vehicle (10) formed by a self-propelled agricultural spray device (12), the axle (28, 30) being fluidically sprung and/or damped relative to a vehicle superstructure (14), in particular for variably controllable roll stabilization of at least one axle (28, 30) of an agricultural vehicle (10), which axle (28, 30) is supported against the vehicle superstructure (14) on both sides in each case by means of at least one double-acting fluid cylinder (34, 34-l, 34-r, 36, 36-l, 36-r), **characterised**
• **in that** each piston side (50, 50-l, 50-r) of the at least two double-acting fluid cylinders (34, 34-l, 34-r, 36, 36-l, 36-r) of the at least one axle (28, 30) is pressurised under the weight load of the vehicle superstructure (14);
• **in that** the at least one axle (28, 30) is sprung and/or damped under inclusion of the piston sides (50, 50-l, 50-r) and the ring sides (54, 54-l, 54-r) of the fluid cylinders (34, 34-l, 34-r, 36, 36-l, 36-r) in a first operating mode;
• and **in that** each of the two piston sides (50, 50-l, 50-r) of the double-acting fluid cylinders (34, 34-l, 34-r, 36, 36-l, 36-r) is shut off from further fluidic connections in a second operating mode for the purpose of reducing and/or compensating for the strong lateral inclination of a vehicle superstructure (14) on a slope,
• while at least the ring side (54, 54-l, 54-r) of the double-acting fluid cylinder (34, 34-l, 34-r, 36, 36-l, 36-r) located downslope of the slope is pressure-relieved by way of a switchable fluidic connection (72), wherein the surface (A₂) effective in the first operating mode for the compression ratios of the double-acting fluid cylinder (34, 34-l, 34-r, 36, 36-l, 36-r) located downslope of the slope is essentially a surface (A₂) taken up by the piston rod (44), and/or is formed by a difference between a surface (A₁) of the piston (45) on the piston side (50, 50-l, 50-r) and an effective surface (A₃) of the piston (45) on the ring side (54, 54-l, 54-r), wherein the effective surface in the second operating mode is formed essentially by the surface (A₁) of the piston (45).

12. The method according to claim 11, in which at least the ring side (54, 54-l, 54-r) of the double-acting fluid cylinder (34, 34-l, 34-r, 36, 36-l, 36-r) located downslope of the slope is pressure-relieved in the second operating mode by way of a switchable fluidic tank connection (72) to a central fluid tank (74).

13. The method according to claim 11 or 12, in which, in the first operating mode, a piston side (50, 50-l, 50-r) of the double-acting fluid cylinder (34, 34-l, 34-r, 36, 36-l, 36-r) on a first side of the axle (28, 30) is fluidically coupled in each case with the ring side (54, 54-l, 54-r) of the double-acting fluid cylinder (34, 34-l, 34-r, 36, 36-l, 36-r) on a second side of the axle (28, 30) for the purpose of forming a fluidic cross connection, wherein a ring side (54, 54-l, 54-r) of the double-acting fluid cylinder (34, 34-l, 34-r, 36, 36-l, 36-r) on the first side of the axle (28, 30) is in each case fluidically coupled with the piston side (50, 50-l, 50-r) of the double-acting fluid cylinder (34, 34-l, 34-r, 36, 36-l, 36-r) on the second side of the axle (28, 30).

14. The method according to claim 13, in which each of the two piston sides (50, 50-l, 50-r) is coupled with a separate pressure storage (66, 66-l, 66-r), in each case by way of a throttle point (64, 64-l, 64-r) having a parallelly arranged check valve (68).

15. The method according to claim 13 or 14, in which the ring side (54, 54-l, 54-r) of the double-acting fluid cylinder (34, 34-l, 34-r, 36, 36-l, 36-r) located upslope of the slope is coupled to a further pressure storage (80-r) by way of a switchable connection (82).

16. The method according to one of the claims 11 to 15, in which an inclination of the vehicle superstructure (14) about a longitudinal axis of the vehicle and therewith a driving condition with slope inclination are detected by means of at least one inclination sensor coupled with the vehicle superstructure (14).

17. The method according to one of the claims 11 to 16, in which an inclination of the vehicle superstructure (14) about a longitudinal axis of the vehicle and therewith a driving condition with slope inclination are detected by means of at least one pressure sensor coupled with the fluid circuit of the fluidically sprung and/or damped axle (28, 30) of the farm vehicle (10).

18. The method according to claim 17, in which in each case at least one pressure sensor is provided in a pressure line of the particular piston side (50, 50-I, 50-r) of the two double-acting fluid cylinders (34, 34-l, 34-r, 36, 36-l, 36-r) of the at least one axle (28, 30) of the farm vehicle (10).

## Revendications

1. Châssis pour un véhicule terrestre (10) constitué d'un dispositif de pulvérisation agricole automoteur (12), doté d'au moins un essieu (28, 30) à suspension et/ou amortissement fluidique par rapport à une carrosserie de véhicule (14), lequel est appuyé contre ladite carrosserie (14) des deux côtés du véhicule (10) à l'aide, respectivement, d'au moins un cylindre fluidique (34, 34-l, 34-r, 36, 36-l, 36-r) à double action, **caractérisé en ce**
• **que** chaque côté piston (50, 50-l, 50-r) desdits au moins deux cylindres fluidiques (34, 34-l, 34-r, 36, 36-l, 36-r) à double action dudit au moins un essieu (28, 30) est soumis, sous la contrainte du poids de la carrosserie du véhicule (14), à une pression,
• **que** dans un premier mode de fonctionnement, ledit au moins un essieu (28, 30) est, y compris les côtés piston (50, 50-l, 50-r) et les côtés anneau (54, 54-l, 54-r) des cylindres fluidiques (34, 34-l, 34-r, 36, 36-l, 36-r), à suspension et/ou amortissement,
• et **que** dans un deuxième mode de fonctionnement destiné à réduire et/ou à compenser une carrosserie de véhicule (14) fortement inclinée sur le côté dans un dévers, chacun des deux côtés piston (50, 50-l, 50-r) des cylindres fluidiques à double action (34, 34-l, 34-r, 36, 36-l, 36-r) est hermétique à tout autre raccordement fluidique,
• alors qu'au moins ledit côté anneau (54, 54-l, 54-r) du cylindre fluidique à double action (34, 34-l, 34-r, 36, 36-l, 36-r) qui est incliné vers le bas dans le dévers, peut être soumis à décompression par le biais d'un raccordement fluidique (72) actionnable, et dans lequel, pour le cylindre fluidique à double action (34, 34-l, 34-r, 36, 36-l, 36-r) incliné vers le bas dans le dévers en premier mode de fonctionnement, la surface effective (A₂) pour les rapports de pression est sensiblement une surface (A₂) mise sous contrainte par la tige de piston (44) et/ou est constituée par une différence entre une surface (A₁) du piston (45) sur le côté piston (50, 50-l, 50-r) et une surface effective (A₃) du piston (45) sur le côté anneau (54, 54-l, 54-r), dans lequel la surface effective est, en deuxième mode de fonctionnement, constituée sensiblement par la surface (A₁) du piston (45).

2. Châssis selon la revendication 1, dans lequel au moins le côté anneau (54, 54-l, 54-r) du cylindre fluide à double action (34, 34-l, 34-r, 36, 36-l, 36-r) incliné vers le bas du dévers est, en deuxième mode de fonctionnement, soumis à décompression par le biais d'un raccordement fluidique (72) actionnable à un réservoir de fluide (74) central.

3. Châssis selon la revendication 1 ou 2, dans lequel en premier mode de fonctionnement un côté piston (50, 50-l, 50-r) du cylindre fluidique à double action (34, 34-l, 34-r, 36, 36-l, 36-r) sur un premier côté de l'essieu (28, 30) est connecté de manière fluidique respectivement au côté anneau (54, 54-l, 54-r) du cylindre fluidique à double action (34, 34-l, 34-r, 36, 36-l, 36-r) sur un deuxième côté dudit essieu (28, 30) pour former une alimentation croisée fluidique, dans lequel un côté anneau (54, 54-l, 54-r) dudit cylindre fluidique à double action (34, 34-l, 34-r, 36, 36-l, 36-r) sur ledit premier côté de l'essieu (28, 30) est connecté de manière fluidique respectivement au côté piston (50, 50-l, 50-r) dudit cylindre fluidique à double action (34, 34-l, 34-r, 36, 36-l, 36-r) sur ledit deuxième côté de l'essieu (28, 30).

4. Châssis selon l'une quelconque des revendications 1 à 3, dans lequel chacun des deux côtés piston (50, 50-l, 50-r) est connecté ou peut être connecté à un accumulateur de pression (66, 66-l, 66-r) séparé, respectivement par le biais d'un passage calibré (64, 64-l, 64-r) à clapet de refoulement (68) agencé en parallèle.

5. Châssis selon la revendication 4, dans lequel en deuxième mode de fonctionnement, lorsque l'alimentation croisée fluidique est déconnectée, chacun des deux côtés piston (50, 50-l, 50-r) du cylindre fluidique à double action (34, 34-l, 34-r, 36, 36-l, 36-r) n'est plus connecté aux accumulateurs de pression (66, 66-l, 66-r) respectifs que par les passages calibrés (64, 64-l, 64-r), quand tous les autres raccordements fluidiques sont fermés.

6. Châssis selon l'une quelconque des revendications 1 à 5, dans lequel le côté anneau (54, 54-l, 54-r) du cylindre fluidique à double action (34, 34-l, 34-r, 36, 36-l, 36-r) incliné vers le bas dans le dévers peut être connecté à un autre accumulateur de pression (80-r) par le biais d'un raccordement (82) déclenchable.

7. Châssis selon l'une quelconque des revendications 1 à 6, dans lequel une inclinaison de la carrosserie du véhicule (14) autour d'un axe longitudinal du véhicule, et ainsi un état de marche avec avancement du véhicule en dévers sont détectés à l'aide d'au moins un capteur d'inclinaison connecté à la carrosserie du véhicule (14).

8. Châssis selon l'une quelconque des revendications 1 à 7, dans lequel une inclinaison de la carrosserie du véhicule (14) autour d'un axe longitudinal du véhicule, et ainsi un état de marche avec avancement du véhicule en dévers sont détectés à l'aide d'au moins un capteur d'inclinaison connecté au circuit fluidique de l'essieu (28, 30), à suspension et/ou amortissement fluidique, du véhicule terrestre (10).

9. Châssis selon la revendication 8, dans lequel respectivement au moins un capteur de pression est prévu ou agencé dans une conduite sous pression du côté piston (50, 50-l, 50-r) respectif des deux cylindres fluidiques à double action (34, 34-l, 34-r, 36, 36-l, 36-r) dudit au moins un essieu (28, 30) du véhicule terrestre (10).

10. Châssis selon l'une quelconque des revendications 1 à 9, qui comprend deux essieux (28, 30) à suspension et/ou amortissement fluidique indépendamment l'un de l'autre, dotés respectivement d'au moins deux roues (32) agencées sur les côtés longitudinaux du véhicule (10), dans lequel les deux cylindres fluidiques à double action (34, 34-l, 34-r, 36, 36-l, 36-r) d'au moins un desdits au moins deux essieux (28, 30) peuvent fonctionner en premier et/ou en deuxième mode de fonctionnement.

11. Procédé de commande de suspension et/ou d'amortissement d'au moins un essieu (28, 30) à suspension et/ou amortissement fluidique par rapport à une carrosserie de véhicule (14), d'un véhicule terrestre (10) constitué d'un dispositif de pulvérisation agricole automoteur (12), notamment pour la stabilisation au roulis à commande variable d'au moins un essieu (28, 30) d'un véhicule agricole (10), lequel est appuyé des deux côtés contre la carrosserie du véhicule (14) respectivement à l'aide d'au moins un cylindre fluidique à double action (34, 34-l, 34-r, 36, 36-l, 36-r), **caractérisé en ce**
• **que** chaque côté piston (50, 50-l, 50-r) desdits au moins deux cylindres fluidiques à double action (34, 34-l, 34-r, 36, 36-l, 36-r) dudit au moins un essieu (28, 30) est soumis, sous la contrainte du poids de la carrosserie du véhicule (14), à une pression,
• **que** dans un premier mode de fonctionnement, ledit au moins un essieu (28, 30) est, y compris les côtés piston (50, 50-l, 50-r) et les côtés anneau (54, 54-l, 54-r) des cylindres fluidiques (34, 34-l, 34-r, 36, 36-l, 36-r), à suspension et/ou amortissement,
• et **que** dans un deuxième mode de fonctionnement destiné à réduire et/ou à compenser une carrosserie de véhicule (14) fortement inclinée sur le côté dans un dévers, chacun des deux côtés piston (50, 50-l, 50-r) des cylindres fluidiques à double action (34, 34-l, 34-r, 36, 36-l, 36-r) est hermétique à tout autre raccordement fluidique,
• alors qu'au moins ledit côté anneau (54, 54-l, 54-r) du cylindre fluidique à double action (34, 34-l, 34-r, 36, 36-l, 36-r) qui est incliné vers le bas dans le dévers, est soumis à décompression par le biais d'un raccordement fluidique (72) déclenchable, et dans lequel, pour le cylindre fluidique à double action (34, 34-l, 34-r, 36, 36-l, 36-r) incliné vers le bas dans le dévers en premier mode de fonctionnement, la surface effective (A₂) pour les rapports de pression est sensiblement une surface (A₂) mise sous contrainte par la tige de piston (44) et/ou est constituée par une différence entre une surface (A₁) du piston (45) du côté piston (50, 50-l, 50-r) et une surface effective (A₃) du piston (45) du côté anneau (54, 54-l, 54-r), dans lequel ladite surface effective est, en deuxième mode de fonctionnement, constituée sensiblement par la surface (A₁) du piston (45).

12. Châssis selon la revendication 11, dans lequel en deuxième mode de fonctionnement, au moins le côté anneau (54, 54-l, 54-r) du cylindre fluidique à double action (34, 34-l, 34-r, 36, 36-l, 36-r) incliné vers le bas dans le dévers est soumis à décompression, par raccordement fluidique (72) déclenchable à un réservoir de fluide (74) central.

13. Procédé selon la revendication 11 ou 12, dans lequel en premier mode de fonctionnement un côté piston (50, 50-l, 50-r) du cylindre fluidique à double action (34, 34-l, 34-r, 36, 36-l, 36-r) sur un premier côté de l'essieu (28, 30) est connecté respectivement de manière fluidique au côté anneau (54, 54-l, 54-r) du cylindre fluidique à double action (34, 34-l, 34-r, 36, 36-l, 36-r) sur un deuxième côté de l'essieu (28, 30) pour former une alimentation croisée fluidique, dans lequel un côté anneau (54, 54-l, 54-r) du cylindre fluidique à double action (34, 34-l, 34-r, 36, 36-l, 36-r) sur le premier côté de l'essieu (28, 30), est connecté de manière fluidique respectivement au côté piston (50, 50-l, 50-r) du cylindre fluidique à double action (34, 34-l, 34-r, 36, 36-l, 36-r) sur le deuxième côté de l'essieu (28, 30).

14. Châssis selon la revendication 13, dans lequel chacun des deux côtés piston (50, 50-l, 50-r) est connecté à un accumulateur de pression (66, 66-l, 66-r) séparé, respectivement par le biais d'un passage calibré (64, 64-l, 64-r) à clapet de refoulement (68) agencé en parallèle.

15. Procédé selon la revendication 13 ou 14, dans lequel le côté anneau (54, 54-l, 54-r) du cylindre fluidique à double action (34, 34-l, 34-r, 36, 36-l, 36-r) incliné vers le bas dans le dévers peut être connecté à un autre accumulateur de pression (80-r) par le biais d'un raccordement (82) déclenchable.

16. Procédé selon l'une quelconque des revendications 11 à 15, dans lequel une inclinaison de la carrosserie du véhicule (14) autour d'un axe longitudinal du véhicule, et ainsi un état de marche avec avancement du véhicule en dévers sont détectés à l'aide d'au moins un capteur d'inclinaison connecté à la carrosserie du véhicule (14).

17. Procédé selon l'une quelconque des revendications 11 à 16, dans lequel une inclinaison de la carrosserie du véhicule (14) autour d'un axe longitudinal du véhicule, et ainsi un état de marche avec avancement du véhicule en dévers sont détectés à l'aide d'au moins un capteur d'inclinaison connecté au circuit fluidique de l'essieu (28, 30), à suspension et/ou amortissement fluidique, du véhicule terrestre (10).

18. Procédé selon la revendication 17, dans lequel respectivement au moins un capteur de pression est prévu dans une conduite de pression du côté piston (50, 50-l, 50-r) respectif des deux cylindres fluidiques à double action (34, 34-l, 34-r, 36, 36-l, 36-r) dudit au moins un essieu (28, 30) du véhicule terrestre (10).
